(19) Europäisches Patentamt / European Patent Office / Office européen des brevets

(11) **EP 4 383 629 B1**

(12) **EUROPEAN PATENT SPECIFICATION**

(45) Date of publication and mention of the grant of the patent:
**15.10.2025   Bulletin 2025/42**

(21) Application number: **22852298.3**

(22) Date of filing: **04.08.2022**

(51) International Patent Classification (IPC):
*H04L 1/16* (2023.01)      *H04L 1/1829* (2023.01)
*H04L 1/1867* (2023.01)      *H04L 5/00* (2006.01)
*H04L 5/14* (2006.01)

(52) Cooperative Patent Classification (CPC):
**H04L 1/1854; H04L 1/1861; H04L 1/1896;**
H04L 5/1469

(86) International application number:
**PCT/CN2022/110263**

(87) International publication number:
**WO 2023/011587 (09.02.2023 Gazette 2023/06)**

(54) **HARQ-ACK TRANSMISSION RESOURCE DETERMINATION METHOD, AND TERMINAL AND STORAGE MEDIUM**

VERFAHREN ZUR BESTIMMUNG VON HARQ-ACK-ÜBERTRAGUNGSRESSOURCEN SOWIE ENDGERÄT UND SPEICHERMEDIUM

PROCÉDÉ DE DÉTERMINATION DE RESSOURCE DE TRANSMISSION HARQ-ACK, TERMINAL ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.08.2021   CN 202110903510**

(43) Date of publication of application:
**12.06.2024   Bulletin 2024/24**

(73) Proprietor: **Vivo Mobile Communication Co., Ltd.**
**Dongguan, Guangdong 523863 (CN)**

(72) Inventors:
• **CHEN, Xiaohang**
**Dongguan, Guangdong 523863 (CN)**
• **ZENG, Chaojun**
**Dongguan, Guangdong 523863 (CN)**

(74) Representative: **Murgitroyd & Company**
**165-169 Scotland Street**
**Glasgow G5 8PL (GB)**

(56) References cited:
**WO-A1-2021/072662      WO-A1-2021/088800**
**US-A1- 2021 006 356**

• HUAWEI ET AL: "UE feedback enhancements for HARQ-ACK", vol. RAN WG1, no. E-meeting; 20210412 - 20210420, 7 April 2021 (2021-04-07), XP052177071, Retrieved from the Internet <URL:https://ftp.3gpp.org/tsg_ran/WG1_RL1/TSGR1_104b-e/Docs/R1-2102351.zip R1-2102351.docx> [retrieved on 20210407]
• CHINA TELECOM: "Discussion on two aspects of UE HARQ-ACK feedback enhancements", vol. RAN WG1, no. e-Meeting; 20210510 - 20210527, 11 May 2021 (2021-05-11), XP052058899, Retrieved from the Internet <URL:https://ftp.3gpp.org/tsg_ran/WG1_RL1/TSGR1_105-e/Docs/R1-2104854.ZIP R1-2104854.DOC> [retrieved on 20210511]
• HUAWEI, CHINA SOUTHERN POWER GRID, BUPT, HISILICON: "UE feedback enhancements for HARQ-ACK", 3GPP DRAFT; R1-2102351, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. E-meeting; 20210412 - 20210420, 7 April 2021 (2021-04-07), Mobile Competence Centre ; 650, route des Lucioles ; F-06921 Sophia-Antipolis Cedex ; France, XP052177071

• HUAWEI, HISILICON: "UE feedback enhancements for HARQ-ACK", 3GPP DRAFT; R1-2104262, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210510 - 20210527, 12 May 2021 (2021-05-12), Mobile Competence Centre ; 650, route des Lucioles ; F-06921 Sophia-Antipolis Cedex ; France , XP052010716

• HUAWEI, HISILICON: "UE feedback enhancements for HARQ-ACK", 3GPP DRAFT; R1-2005243, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. E-meeting; 20200817 - 20200828, 8 August 2020 (2020-08-08), Mobile Competence Centre ; 650, route des Lucioles ; F-06921 Sophia-Antipolis Cedex ; France , XP051917291

• HUAWEI, HISILICON: "UE feedback enhancements for HARQ-ACK", 3GPP DRAFT; R1-2007565, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. E-meeting; 20201026 - 20201113, 24 October 2020 (2020-10-24), Mobile Competence Centre ; 650, route des Lucioles ; F-06921 Sophia-Antipolis Cedex ; France , XP051946417

## Description

### TECHNICAL FIELD

This application pertains to the field of communication technologies and specifically relates to a method for determining a hybrid automatic repeat request-acknowledgement (Hybrid Automatic Repeat Request-Acknowledgement, HARQ-ACK) transmission resource, a terminal, and a storage medium.

### BACKGROUND

In the existing HARQ-ACK transmission, when user equipment (User Equipment, UE) is configured with semi-persistent scheduling (Semi-Persistent Scheduling, SPS), a HARQ-ACK feedback time for each SPS configuration is indicated by downlink control information (Downlink Control Information, DCI) for activating an SPS configuration. As a result, HARQ-ACKs corresponding to SPS physical downlink shared channels (Physical Downlink Shared Channel, PDSCH) for different SPS configurations may be reported at different times.

However, when a HARQ-ACK feedback time corresponding to one SPS PDSCH collides with a downlink (Downlink, DL) in a time division duplex (Time Division Duplex, TDD) scenario, the HARQ-ACK of the SPS PDSCH will be discarded, resulting in performance degradation of the SPS PDSCH.

XP 052177071: "UE feedback enhancements for HARQ-ACK" (3GPP DRAFT; R1-2102351) provides some views on the details of enhancements for SPS HARQ-ACK dropping for TDD systems, and then further discusses other potential enhancements for HARQ-ACK feedback in Rel-17.

XP 052058899: "Discussion on two aspects of UE HARQ-ACK feedback enhancements" (3GPP DRAFT; R1-2104854) provides the aspects of PUCCH carrier switching and retransmission of cancelled HARQ.

### SUMMARY

Embodiments of this application provide a method for determining a HARQ-ACK transmission resource, a terminal, and a storage medium, so as to solve the prior-art problem that HARQ-ACKs cannot be transmitted normally due to resource conflicts. The invention is defined by the appended claims.

According to a first aspect, the present disclosure provides a method for determining a HARQ-ACK transmission resource which is defined by claim 1.

According to a second aspect, the present disclosure provides a terminal which is defined by claim 10.

According to a third aspect, the present disclosure provides a readable storage medium which is defined by claim 11.

Further advantageous embodiments of the present disclosure are indicated in the dependent claims.

## BRIEF DESCRIPTION OF DRAWINGS

FIG. 1 is a structural diagram of a wireless communication system to which embodiments of this application are applicable;
FIG. 2 is a schematic flowchart of a method for determining a HARQ-ACK transmission resource according to an embodiment of this application;
FIG. 3 is a schematic structural diagram of a carrier in a method for determining a HARQ-ACK transmission resource according to an embodiment of this application;
FIG. 4 is a schematic structural diagram of an apparatus for determining a HARQ-ACK transmission resource according to an embodiment of this application;
FIG. 5 is a schematic structural diagram of a communication device according to an embodiment of this application; and
FIG. 6 is a schematic diagram of a hardware structure of a terminal implementing an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application.

The terms "first", "second", and the like in the specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the contextually associated objects have an "or" relationship.

It is worth noting that the technology described in the embodiments of this application is not limited to long term evolution (Long Term Evolution, LTE)/LTE-Advanced (LTE-Advanced, LTE-A) systems, but may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" are often used interchangeably in the embodiments of this application. The technologies described may be used in the above-mentioned systems and radio technologies as well as other systems and radio technologies. In the following descriptions, a new radio (New Radio, NR) system is described for illustration purposes, NR terms are used in most of the following descriptions, and these technologies may also be applied to other applications than the NR system application, for example, the 6th generation (6th Generation, 6G) communication system.

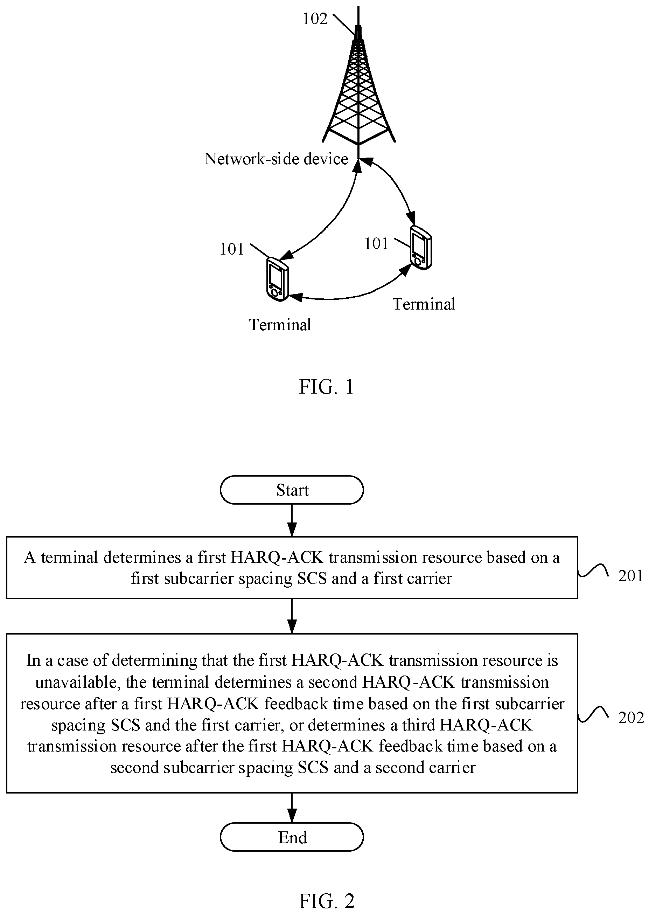

FIG. 1 is a structural diagram of a wireless communication system to which embodiments of this application are applicable. The wireless communication system includes a terminal 101 and a network-side device 102. The terminal 101 may also be referred to as a terminal device or a user terminal or user equipment (User Equipment, UE). The terminal 101 may be a terminal-side device, such as a mobile phone, a tablet personal computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicular user equipment (VUE), pedestrian user equipment (PUE), or smart-home appliance (a smart-home device with a wireless communication function, for example, a refrigerator, a television, a washing machine, or a piece of furniture). The wearable device includes a smart watch, a smart band, smart earphones, smart glasses, smart jewelry (a smart bracelet, a smart chain bracelet, a smart ring, a smart necklace, a smart anklet, a smart chain anklet, or the like), a smart wrist band, smart clothing, a game console, or the like. It should be noted that the terminal 101 is not limited to a specific type in the embodiments of this application. The network-side device 102 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a WLAN access point, a Wi-Fi node, a transmission reception point (Transmitting Receiving Point, TRP), or other appropriate terms in the art. Provided that the same technical effects are achieved, the base station is not limited to any specific technical term. It should be noted that in the embodiments of this application, only the base station in the NR system is used as an example, although the specific type of the base station is not limited.

In this embodiment of this application, the terminal may be configured to activate at least one carrier, such as carrier 1 to carrier M, where an SCS corresponding to a carrier $CC_m$ is $SCS_m$. Assuming that among M carriers configured for the terminal, N carriers are configured with a physical uplink control channel (Physical Uplink Control Channel, PUCCH) resource, N<=M, and a network has been configured to enable PUCCH carrier switching (carrier switching), the terminal can switch on the N carriers configured with the PUCCH resource.

Further, for the foregoing N carriers, the network may configure one or more PUCCH cell timing patterns (cell timing pattern). Each pattern indicates a PUCCH carrier available for a period of time, and different PUCCH cell timing patterns may indicate the same or different PUCCH carriers. A specific implementation for the PUCCH cell pattern may include: A time-domain pattern may be configured uniformly for these N cells or may be configured separately for each PUCCH cell.

The terminal is configured with at least one DL SPS configuration resource on carrier i, including SPS config 1 to SPS config L. It is assumed that the terminal receives a PDSCH of SPS config j at slot n. Based on k (that is, K1) indicated by DCI for activating SPS config j, a HARQ-ACK corresponding to the PDSCH is reported at slot n+k.

Since it is determined that within slot n+k, some or all of symbols occupied by a PUCCH resource for carrying a HARQ-ACK corresponding to an SPS PDSCH collide with DL symbols (for example, DL symbol, SSB, and CORESET#0), the terminal postpones the feedback of the HARQ-ACK to a subsequent time point, and the PUCCH resource for carrying the HARQ-ACK may be located on any of the foregoing N carriers configured with the PUCCH resource.

The following describes in detail a method for determining a HARQ-ACK transmission resource, a terminal, and a storage medium provided in the embodiments of this application by using some embodiments and application scenarios thereof with reference to the accompanying drawings.

FIG. 2 is a schematic flowchart of a method for determining a HARQ-ACK transmission resource according to an embodiment of this application. The method may be executed by a terminal, and the terminal may specifically be a terminal 101 shown in FIG. 1. As shown in FIG. 2, the method includes the following steps.

Step 201. A terminal determines a first HARQ-ACK transmission resource based on a first subcarrier spacing SCS and a first carrier.

It can be understood that in a case that the terminal is configured to activate at least one carrier and each or some of the carriers have been configured with a physical uplink control channel (Physical Uplink Control Channel, PUCCH), the terminal may is configured, on each carrier, with at least one DL SPS configuration resource, which may be denoted as, for example, SPS config 1 to SPS config L.

At a time-domain location, for example, slot n, when the terminal receives PDSCH signaling for the DL SPS configuration resource SPS config j, the terminal may determine any one of the carriers configured with the PUCCH and a subcarrier spacing SCS of the carrier. The carrier may be referred as a first carrier and its corresponding SCS may be referred to as a first subcarrier spacing SCS.

Then, the terminal determines a HARQ-ACK feedback time based on the first subcarrier spacing SCS and/or the first carrier to obtain a HARQ-ACK transmission resource corresponding to the HARQ-ACK feedback time. The HARQ-ACK feedback time may be referred to as a first HARQ-ACK feedback time, and the HARQ-ACK transmission resource may be referred to as a first HARQ-ACK transmission resource.

The HARQ-ACK may be a HARQ-ACK corresponding to a specific PDSCH, or may generally be a HARQ-ACK corresponding to a PDSCH that needs to report the HARQ-ACK, which may be HARQ-ACK information or a HARQ-ACK codebook such as Type 1/2/3 codebook. The PDSCH may be a dynamically scheduled PDSCH or may be an SPS PDSCH, which is not specifically limited in the embodiments of this application.

Step 202. In a case of determining that the first HARQ-ACK transmission resource is unavailable, the terminal determines a second HARQ-ACK transmission resource after a first HARQ-ACK feedback time based on the first subcarrier spacing SCS and the first carrier, or determines a third HARQ-ACK transmission resource after the first HARQ-ACK feedback time based on a second subcarrier spacing SCS and a second carrier.

The first HARQ-ACK feedback time is determined based on the first subcarrier spacing SCS or based on the first subcarrier spacing SCS and the first carrier.

It can be understood that in this embodiment of this application, on the basis that the first HARQ-ACK transmission resource is determined based on the first subcarrier spacing SCS and the first carrier, it may be further determined whether the first HARQ-ACK transmission resource is available. For example, it may be detected whether some or all of symbols occupied by the first HARQ-ACK transmission resource that is a PUCCH resource for carrying a HARQ-ACK corresponding to an SPS PDSCH within the first HARQ-ACK feedback time collide with TDD DL symbols (for example, DL symbol, SSB, and CORESET#0). In a case of collision, the first HARQ-ACK transmission resource is considered unavailable, otherwise it is considered available.

In a case that it is determined that the first HARQ-ACK transmission resource is unavailable, if PUCCH carrier switching (carrier switching) is enabled in a network configuration, the terminal can switch on the carriers configured with the PUCCH resource. This means that feedback of a to-be-transmitted HARQ-ACK is postponed to a subsequent time point. The PUCCH resource for carrying the HARQ-ACK may be located on any of the carriers configured with the PUCCH resource.

Specifically, in a case that a carrier or PUCCH resource to be switched to is determined, another carrier other than the first carrier may be selected from the carriers configured with the PUCCH resource, an SCS corresponding to the carrier may be determined, and then another HARQ-ACK transmission resource may be determined based on the carrier and an SCS corresponding to the carrier. The another carrier may be referred to as the second carrier, the SCS corresponding to the another carrier may be referred to as the second subcarrier spacing SCS, and the HARQ-ACK transmission resource determined based on the another carrier and its corresponding SCS may be referred as the third HARQ-ACK transmission resource. It should be understood that to enable the third HARQ-ACK transmission resource to be available, the resource is determined to be after the first HARQ-ACK feedback time.

Alternatively, in a case that the first HARQ-ACK transmission resource is unavailable, the terminal may determine, based on the first subcarrier spacing SCS and the first carrier, an available HARQ-ACK transmission resource at another time-domain location corresponding to the first carrier, where the HARQ-ACK transmission resource may be referred to as the second HARQ-ACK transmission resource. It should be likewise understood that to enable the second HARQ-ACK transmission resource to be available, the resource is determined to be after the first HARQ-ACK feedback time.

Optionally, the first carrier and/or the second carrier is determined based on one of the following:

a carrier with a smallest number in carriers configured with a physical uplink control channel PUCCH resource;
a carrier with a largest number in carriers configured with a physical uplink control channel PUCCH resource;
a carrier corresponding to a current location in a physical uplink control channel PUCCH cell timing pattern;
a carrier determined according to an order of numbers of multiple carriers in a case that the first carrier and/or the second carrier corresponds to the multiple carriers;
a carrier of a semi-persistent scheduling SPS physical downlink shared channel PDSCH received by the terminal;
a carrier for uplink transmission indicated by downlink control information DCI;
a primary carrier, a primary cell (Primary cell, PCell) or a primary secondary cell (Primary cell/Secondary cell, PScell); and
a secondary cell (Secondary cell, SCell).

It can be understood that depending on the actual configuration of the network side, the first carrier and/or the second carrier may be determined according to any one of the various carriers listed above. The carrier corresponding to a current location in a PUCCH cell timing pattern is a carrier corresponding to a current slot in the PUCCH cell timing pattern. If there are multiple corresponding carriers in the PUCCH cell timing pattern, the carriers may be selected in an ascending (or descending) order based on their numbering. The carrier for uplink transmission indicated by the DCI includes, for example, a carrier for PUCCH transmission and/or a carrier for PUSCH transmission.

Optionally, the first subcarrier spacing SCS and/or the second subcarrier spacing SCS is determined based on one of the following:

a reference subcarrier spacing SCS configured by a network-side device;
a subcarrier spacing SCS uniformly configured by the network-side device for a cell group;
a subcarrier spacing SCS corresponding to a carrier with a smallest number in carriers configured with a physical uplink control channel PUCCH resource;
a subcarrier spacing SCS corresponding to a carrier with a largest number in carriers configured with a physical uplink control channel PUCCH resource;
a subcarrier spacing SCS of a carrier corresponding to a current location in a physical uplink control channel PUCCH cell timing pattern;
a subcarrier spacing SCS of a carrier determined according to an order (for example, an ascending order or a descending order) of numbers of multiple carriers in a case that the first carrier and/or the second carrier corresponds to the multiple carriers, or a subcarrier spacing SCS determined according to an order of subcarrier spacings SCSs of the multiple carriers;
a subcarrier spacing SCS of a carrier of a semi-persistent scheduling SPS physical downlink shared channel PDSCH received by the terminal;
a subcarrier spacing SCS of a carrier for uplink transmission indicated by downlink control information DCI;
a subcarrier spacing SCS of a primary carrier, a primary cell PCell, or a primary secondary cell PScell; and
a subcarrier spacing SCS of a secondary cell SCell.

It can be understood that the first subcarrier spacing SCS and/or the second subcarrier spacing SCS may be in a one-to-one correspondence with the optional ranges of the first carrier and/or the second carrier listed in the foregoing embodiments, including the optional ranges listed above.

It should be understood that the foregoing steps 201 and 202 may be repeated until an available HARQ-ACK transmission resource or a location corresponding to a maximum postpone time is ultimately determined from the foregoing carriers configured with the PUCCH resource. The location corresponding to the maximum postpone time may be determined based on the first subcarrier spacing SCS or the second subcarrier spacing SCS.

In the method for determining a HARQ-ACK transmission resource according to this embodiment of this application, a HARQ-ACK transmission resource is determined based on a subcarrier spacing SCS of a carrier and the carrier, and transmission of a HARQ-ACK is postponed to a subsequent available uplink resource in a case that the determined HARQ-ACK transmission resource is unavailable, which can effectively ensure reliable HARQ-ACK transmission and improve the performance of SPS PDSCH transmission.

The determining a third HARQ-ACK transmission resource after the first HARQ-ACK feedback time based on a second subcarrier spacing SCS and a second carrier includes at least one of the following:

determining a second HARQ-ACK feedback time after the first HARQ-ACK feedback time based on the second subcarrier spacing SCS, determining the second carrier based on the second HARQ-ACK feedback time, and determining the third HARQ-ACK transmission resource based on the second HARQ-ACK feedback time and the second carrier;
determining a third HARQ-ACK feedback time based on the second subcarrier spacing SCS and the second carrier, and determining the third HARQ-ACK transmission resource based on the third HARQ-ACK feedback time and the second carrier; and
determining a fourth HARQ-ACK feedback time after the first HARQ-ACK feedback time based on the first subcarrier spacing SCS and the second subcarrier spacing SCS, and determining the third HARQ-ACK transmission resource based on the fourth HARQ-ACK feedback time and the second carrier.

It can be understood that in a case of switching to the second carrier to determine the third HARQ-ACK transmission resource, at least one of the ways listed above may be used for determining the third HARQ-ACK transmission resource based on the second subcarrier spacing SCS and the second carrier.

Specifically, similar to the case of determining the first HARQ-ACK transmission resource based on the first subcarrier spacing SCS and the first carrier, the second HARQ-ACK feedback time may be determined first based on the second subcarrier spacing SCS, where the second HARQ-ACK feedback time is after the first HARQ-ACK feedback time. Then, the second carrier is determined based on the second HARQ-ACK feedback time. Ultimately, the third HARQ-ACK transmission resource is determined based on the second HARQ-ACK feedback time and the second carrier.

Alternatively, the third HARQ-ACK feedback time is determined first based on the second subcarrier spacing SCS and the second carrier, and the third HARQ-ACK transmission resource is then determined based on the third HARQ-ACK feedback time and the second carrier. When the third HARQ-ACK feedback time is determined based on the second subcarrier spacing SCS and the second carrier, a HARQ-ACK feedback time indication set corresponding to the second carrier may be determined first, and the set is then analyzed based on the second subcarrier spacing SCS so as to determine the third HARQ-ACK feedback time. Optionally, the third HARQ-ACK feedback time is after the first HARQ-ACK feedback time.

Alternatively, the fourth HARQ-ACK feedback time is determined first based on the first subcarrier spacing SCS and the second subcarrier spacing SCS, and the fourth HARQ-ACK feedback time is after the first HARQ-ACK feedback time. Then, the third HARQ-ACK transmission resource is determined based on the fourth HARQ-ACK feedback time and the second carrier. For example, if it is assumed that the first subcarrier spacing SCS is $u_1$, the second subcarrier spacing SCS is $u_2$, and the first HARQ-ACK feedback time is slot x, it may be determined that the fourth HARQ-ACK feedback time is

slot $\mathrm{slot}\left\lfloor x \cdot 2^{u_2 - u_1} \right\rfloor + \max(2^{u_2 - u_1}, 1)$ .

In this embodiment of this application, a HARQ-ACK feedback time after the first HARQ-ACK feedback time is determined first, and then the third HARQ-ACK transmission resource is determined based on the HARQ-ACK feedback time and the second carrier. This can determine an available resource with reference to subcarrier spacings of different carriers, so as to ensure reliable transmission.

Optionally, a time interval between a HARQ-ACK transmission resource and a time division duplex TDD downlink DL resource is not less than a preset threshold, where the HARQ-ACK transmission resource is determined based on at least one of the second HARQ-ACK feedback time, the third HARQ-ACK feedback time, and the fourth HARQ-ACK feedback time, and the preset threshold includes a predetermined number of time units configured by a network-side device or predefined by the terminal.

It can be understood that in this embodiment of this application, when the third HARQ-ACK transmission resource is determined based on the second HARQ-ACK feedback time, the third HARQ-ACK feedback time, and the fourth HARQ-ACK feedback time that are determined in the foregoing embodiments and are after the first HARQ-ACK feedback time, a time interval between the third HARQ-ACK transmission resource and the time division duplex TDD downlink DL resource may be not less than the preset threshold. In other words, a time interval including at least L time units may be present between the determined third HARQ-ACK transmission resource and the DL resource, where L is a positive integer predefined by the terminal or configured by the network.

In this embodiment of this application, limiting the time interval between the third HARQ-ACK transmission resource and the DL resource can more quickly obtain an available third HARQ-ACK transmission resource.

Further, an interval between the first HARQ-ACK feedback time or a semi-persistent scheduling SPS physical downlink shared channel PDSCH and each of the second HARQ-ACK feedback time, the third HARQ-ACK feedback time, and the fourth HARQ-ACK feedback time is not greater than a first maximum postpone length, where the first maximum postpone length is determined based on the first subcarrier spacing SCS or the second subcarrier spacing SCS.

It can be understood that since the PUCCH resource is configured on limited carriers of the network side, HARQ-ACK transmission cannot be infinitely postponed. Specifically, in this embodiment of this application, a maximum postpone length is determined based on the first subcarrier spacing SCS or the second subcarrier spacing SCS, and the interval between the first HARQ-ACK feedback time or the semi-persistent scheduling physical downlink shared channel (SPS PDSCH) and each of the second HARQ-ACK feedback time, the third HARQ-ACK feedback time, and the fourth HARQ-ACK feedback time is limited to be not greater than the maximum postpone length, so as to keep the determined HARQ-ACK transmission resource within an available carrier range. For ease of distinction, the maximum postpone length therein may be referred to as a first maximum postpone length.

It should be understood that in this embodiment of this application, in a process of determining an available UL resource, HARQ-ACK feedback is postponed first in time dimension, to be specific, the second HARQ-ACK feedback time, the third HARQ-ACK feedback time, or the fourth HARQ-ACK feedback time is determined, and a corresponding carrier is then determined until the available UL resource or the location corresponding to the maximum postpone time is found. The location corresponding to the maximum postpone time is associated with the first maximum postpone length, both of which may be determined based on the first subcarrier spacing SCS or the second subcarrier spacing SCS.

For example, in a case that an initial location for HARQ-ACK feedback is slot y and slot y corresponds to the first subcarrier spacing SCS, it may be determined, based on the second subcarrier spacing SCS, that a location corresponding to a maximum postpone is slot

$\left\lfloor y \cdot 2^{u_2 - u_1} \right\rfloor + k + K_{def}$ .

In a case that a reception location of the physical downlink share channel PDSCH is slot z and slot z corresponds to the first subcarrier spacing SCS, it may be determined, based on the second subcarrier spacing SCS, that a location corresponding to a maximum postpone is slot $\left\lfloor z \cdot 2^{u_2 - u_1} \right\rfloor + k + K_{def}$ .

$u_1$ and $u_2$ respectively denote the first subcarrier spacing SCS and the second subcarrier spacing SCS, $K_{def}$ or $k+K_{def}$ represents a maximum postpone time for a HARQ-ACK, that is, a postpone time, $K_{def}$ may be determined based on the second subcarrier spacing SCS, and k represents a HARQ-ACK feedback time interval configured by the network.

In this embodiment of this application, limiting the time interval between the first HARQ-ACK feedback time or the SPS PDSCH and each of the second HARQ-ACK feedback time, the third HARQ-ACK feedback time, and the fourth HARQ-ACK feedback time can keep the determined HARQ-ACK transmission resource within the available carrier range.

Optionally, the determining a second HARQ-ACK feedback time after the first HARQ-ACK feedback time based on the second subcarrier spacing SCS includes: determining whether there is an available uplink resource on the first carrier within the first HARQ-ACK feedback time; in a case that there is no available uplink resource on the first carrier within the first HARQ-ACK feedback time, determining a postpone time based on the second subcarrier spacing SCS; and determining the second HARQ-ACK feedback time based on the first HARQ-ACK feedback time and the postpone time.

It can be understood that in this embodiment of this application, in the case that there is no available resource on the first carrier, the second HARQ-ACK feedback time is determined based on the second subcarrier spacing SCS. Therefore, before switching to the second carrier, the terminal detects whether there is an available resource on the first carrier after calculating the first HARQ-ACK feedback time based on the first carrier. If there is no available resource on the first carrier, the terminal determines the second HARQ-ACK feedback time after the first HARQ-ACK feedback time and switches to the second carrier to continue searching for an available resource.

For example, assuming that the first HARQ-ACK feedback time is slot j, the terminal determines an available UL resource on the first carrier at slot j. If there is no available UL resource at slot j, the terminal determines the second HARQ-ACK feedback time based on the second subcarrier spacing SCS, for example, j=j+d, where d is a postpone time predefined by the terminal or configured by the network, and d is determined based on the second subcarrier spacing SCS.

Then, the terminal may determine the second carrier based on the second HARQ-ACK feedback time and ultimately determine, based on the second HARQ-ACK feedback time and the second carrier, the available UL resource or the location corresponding to the maximum postpone time on the second carrier.

In this embodiment of this application, determining a given postpone time based on the second subcarrier spacing SCS and determining the second HARQ-ACK feedback time based on the postpone time can enable the terminal to search an available HARQ-ACK transmission resource on a same carrier without the need for carrier switching. This features higher efficiency.

The foregoing embodiments are examples for describing the embodiments of this application without limiting the protection scope of the embodiments of this application. For example, a method for determining a HARQ-ACK transmission resource according to an embodiment of this application may include the following processing steps.

(1) Determine a HARQ-ACK transmission resource based on a first SCS and a first carrier.

Optionally, a first HARQ-ACK feedback time is determined based on the first SCS, the first carrier is determined based on the first HARQ-ACK feedback time, and the HARQ-ACK transmission resource is determined based on the first HARQ-ACK feedback time and the first carrier.

Optionally, the first HARQ-ACK feedback time is determined based on a HARQ-ACK feedback time indication set (K1 set) corresponding to the first SCS.

Optionally, the first HARQ-ACK feedback time is determined based on a K1 set configured for a cell group.

Optionally, the first HARQ-ACK feedback time is determined based on the first SCS and the first carrier, and the HARQ-ACK transmission resource is determined based on the first HARQ-ACK feedback time and the first carrier.

Optionally, the first carrier is determined according to a network indication or a predefined rule.

Optionally, the first HARQ-ACK feedback time is determined based on a HARQ-ACK feedback time indication set (K1 set) corresponding to the first carrier.

Optionally, UE determines, based on the first SCS, an initial location (for example, slot n+k) for HARQ-ACK feedback, and determines a first carrier corresponding to the HARQ-ACK feedback. Specifically, k is defined based on the first SCS.

(2) In a case that no available HARQ-ACK transmission resource is determined based on the first HARQ-ACK feedback time and the first carrier, determine a HARQ-ACK transmission resource after the first HARQ-ACK feedback time based on a second SCS and a second carrier.

Optionally, a second HARQ-ACK feedback time is determined based on the second SCS, where the second HARQ-ACK feedback time is after the first HARQ-ACK feedback time; the second carrier is determined based on the second HARQ-ACK feedback time; and the HARQ-ACK transmission resource is determined based on the second HARQ-ACK feedback time and the second carrier.

Specifically, UE determines an available UL resource on the first carrier at slot j (the first HARQ-ACK feedback time); in a case of no available UL resource at slot j; determines the second HARQ-ACK feedback time based on the second SCS, for example, j=j+d (d is associated with the second SCS); determines the second carrier based on the second HARQ-ACK feedback time; and determines an available UL resource based on the second HARQ-ACK feedback time and the second carrier.

Optionally, the second HARQ-ACK feedback time is determined based on the second SCS and the second carrier, and the HARQ-ACK transmission resource is determined based on the second HARQ-ACK feedback time and the second carrier.

Specifically, the second HARQ-ACK feedback time is determined based on the second SCS and the second carrier, where the second HARQ-ACK feedback time is after the first HARQ-ACK feedback time.

Optionally, a time interval including at least L time units is present between the second HARQ-ACK feedback time and the DL resource, where L is predefined or configured by the network.

Optionally, the second HARQ-ACK feedback time is determined based on the first SCS and the second SCS, where the second HARQ-ACK feedback time is after the first HARQ-ACK feedback time. Specifically, if the first SCS is $u_1$, the second SCS is $u_2$, and the first HARQ-ACK feedback time is slot x, the second HARQ-ACK feedback time is slot $\left\lfloor x \cdot 2^{u_2-u_1} \right\rfloor + \max(2^{u_2-u_1},1)$.

Optionally, a time interval including at least L time units is present between the second HARQ-ACK feedback time and the DL resource, where L is predefined or configured by the network.

(3) Steps (1) and (2) are repeated until an available UL resource or a location corresponding to a maximum postpone time is determined. The location corresponding to the maximum postpone time is determined based on the first SCS or the second SCS.

Optionally, HARQ-ACK feedback is postponed first in time dimension, to be specific, the second HARQ-ACK feedback time is determined, and a corresponding carrier is then determined until the available UL resource or the location corresponding to the maximum postpone time is found.

Specifically, an initial location for HARQ-ACK feedback is slot y, an SCS corresponding to slot y is a first SCS $u_1$, and therefore a location corresponding to a maximum postpone time is determined as slot $\text{slot}\left\lfloor y \cdot 2^{u_2-u_1} \right\rfloor + k + K_{def}$ based on a second SCS $u_2$, where $K_{def}$ is determined based on the second SCS. $K_{def}$ or $(k+K_{def})$ represents a maximum postpone time for a HARQ-ACK.

Specifically, a PDSCH reception location is slot z, an SCS corresponding to slot z is a first SCS $u_1$, and therefore a location corresponding to a maximum postpone time is determined as $\text{slot}\left\lfloor z \cdot 2^{u_2-u_1} \right\rfloor + k + K_{def}$ based on a second SCS, where $K_{def}$ is determined based on the second SCS. $K_{def}$ or $(k+K_{def})$ represents a maximum postpone time for a HARQ-ACK.

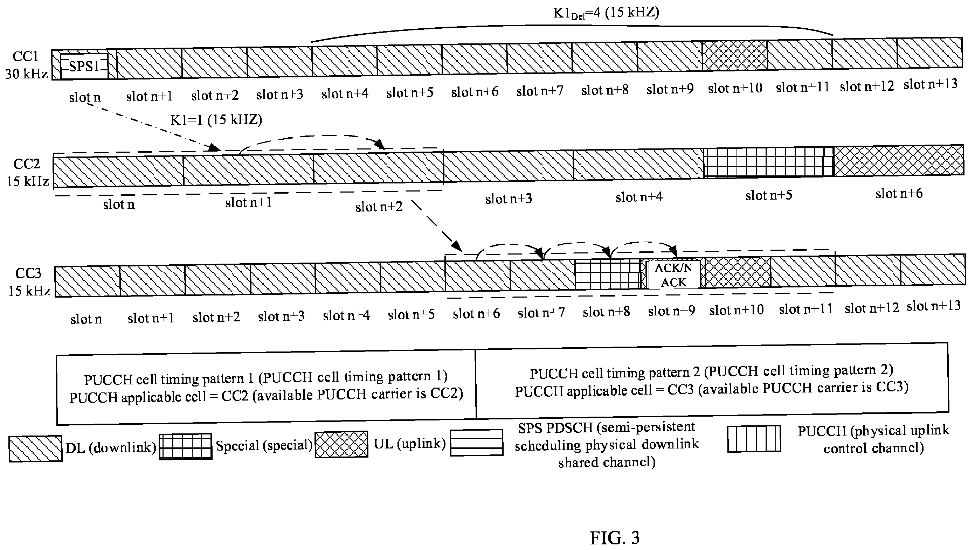

For example, FIG. 3 is a schematic structural diagram of a carrier in a method for determining a HARQ-ACK transmission resource according to an embodiment of this application. It is assumed that a network has configured PUCCH cell timing pattern 1 and PUCCH cell timing pattern 2, where an available PUCCH carrier in PUCCH cell timing pattern 1 is CC2 (15 kHz) and corresponds to slot $n_2$ to slot $n_2+2$; and an available PUCCH carrier in PUCCH cell timing pattern 2 is CC3 (30 kHz) and corresponds to slot n+6 to slot n+11.

UE receives an SPS PDSCH on CC1 (SCS=30 kHz) at a time-domain location slot $n_1$.

According to the foregoing embodiments, the first carrier is a carrier corresponding to PUCCH cell timing pattern 1, that is, CC2. The first SCS is a corresponding SCS of a carrier corresponding to PUCCH cell timing pattern 1. The second SCS is a corresponding SCS of a carrier corresponding to PUCCH cell timing pattern 2.

HARQ-ACK corresponding to the PDSCH obtained based on the first carrier and the first SCS is reported at slot $n_2+k_1$, where $k_1=1$, and $k_1$ is defined based on SCS=15 kHz. Therefore, an initial location for HARQ-ACK feedback is slot $n_2+1$ with SCS=15 kHz.

Assuming that $K1_{Def}=4$, where $K1_{Def}$ is defined based on SCS=15 kHz, a maximum postpone time length of a HARQ-ACK corresponding to the SPS PDSCH includes 4 slots with SCS 15 kHz. This means that the feedback of the HARQ-ACK can be postponed to slot $n_2+5$ at most.

The UE searches an available UL resource at slot $n_2+1$ on CC2. Since slot $n_2+1$ of the CC2 collides with DL, the UE postpones HARQ-ACK feedback to a subsequent time-domain location. Since the PUCCH cell timing pattern 1 is still applicable, the UE searches an available UL resource at slot $n_2+2$ on CC2. Similarly, slot $n_2+2$ collides with DL, the UE continues to postpone HARQ-ACK feedback to a subsequent time-domain location.

In this case, based on the PUCCH cell timing pattern 2, an available corresponding carrier is CC3. Based on the second SCS=30 kHz, an available UL resource is searched from slot $n_3+6$ at a step length of slot=30 kHz. Specifically, in a case of determining slot $n_3+9$ of the CC3 as the available UL resource, the UE utilizes it for HARQ-ACK transmission.

The foregoing processing procedures may be simplified into the following processing procedures.

(1) Determine a HARQ-ACK transmission resource based on a first SCS and a first carrier.
(2) In a case of no available HARQ-ACK transmission resource based on a first HARQ-ACK feedback time and the first carrier, determine a HARQ-ACK transmission resource after the first HARQ-ACK feedback time based on a second SCS and a second carrier.
(3) Steps (1) and (2) are repeated until an available UL resource or a location corresponding to a maximum postpone time is determined. The location corresponding to the maximum postpone time is determined based on the first SCS or the second SCS.

That the terminal determines a second HARQ-ACK transmission resource after the first HARQ-ACK feedback time based on the first subcarrier spacing SCS and the first carrier includes at least one of the following:

a fifth HARQ-ACK feedback time after the first HARQ-ACK feedback time is determined based on the first subcarrier spacing SCS and the first carrier, and the second HARQ-ACK transmission resource is determined based on the fifth HARQ-ACK feedback time and the first carrier.
a sixth HARQ-ACK feedback time after the first HARQ-ACK feedback time is determined based on the first subcarrier spacing SCS and the second subcarrier spacing SCS, and the second HARQ-ACK transmission resource is determined based on the sixth HARQ-ACK feedback time and the first carrier.

It can be understood that in a case that the first carrier corresponds to multiple time-domain locations, in the foregoing embodiments, at least one of the ways listed above may be used for determining the second HARQ-ACK transmission resource based on the first subcarrier spacing SCS and the first carrier.

Specifically, similar to that the first HARQ-ACK transmission resource is determined based on the first subcarrier spacing SCS and the first carrier, another HARQ-ACK feedback time may be determined first as the fifth HARQ-ACK feedback time based on the first subcarrier spacing SCS and the first carrier, and the second HARQ-ACK transmission resource is then determined based on the fifth HARQ-ACK feedback time and the first carrier. When a second HARQ-ACK feedback time is determined based on the first subcarrier spacing SCS and the first carrier, a HARQ-ACK feedback time indication set corresponding to the first carrier may be determined first, and the set is then analyzed based on the first subcarrier spacing SCS so as to determine the fifth HARQ-ACK feedback time.

Alternatively, another HARQ-ACK feedback time is determined first as the sixth HARQ-ACK feedback time based on the first subcarrier spacing SCS and the second subcarrier spacing SCS, and the sixth HARQ-ACK feedback time is after the first HARQ-ACK feedback time. Then, the second HARQ-ACK transmission resource is determined based on the sixth HARQ-ACK feedback time and the first carrier. For example, if it is assumed that the first subcarrier spacing SCS is $u_1$, the second subcarrier spacing SCS is $u_2$, and the first HARQ-ACK feedback time is slot x, it may be determined that the sixth HARQ-ACK feedback time is slot

$$\left\lfloor x \cdot 2^{u_2 - u_1} \right\rfloor + \max(2^{u_2 - u_1}, 1) .$$

In this embodiment of this application, a HARQ-ACK feedback time after the first HARQ-ACK feedback time is determined first, and then the second HARQ-ACK transmission resource is determined based on the HARQ-ACK feedback time in combination with the first carrier. This can determine an available resource in combination with subcarrier spacings of different carriers, ensuring reliable transmission.

Optionally, a time interval between the fifth HARQ-ACK feedback time and a downlink DL resource for time division duplex TDD is not less than a preset threshold, where the preset threshold includes a predetermined number of time units configured by a network-side device or predefined by the terminal.

It can be understood that to increase the availability of the determined HARQ-ACK transmission resource, on the basis that the fifth HARQ-ACK feedback time after the first HARQ-ACK feedback time is determined, in a case that the second HARQ-ACK transmission resource is determined based on the fifth HARQ-ACK feedback time, a time interval between the second HARQ-ACK transmission resource and the downlink DL resource for time division duplex TDD may be not less than the preset threshold. In other words, a time interval including at least L time units may be present between the determined second HARQ-ACK transmission resource and the DL resource, where L is a positive integer predefined by the terminal or configured by the network.

In this embodiment of this application, limiting the time interval between the second HARQ-ACK transmission resource and the DL resource can more quickly obtain an available second HARQ-ACK transmission resource.

Optionally, an interval between the first HARQ-ACK feedback time or a semi-persistent scheduling SPS physical downlink shared channel PDSCH and each of the fifth HARQ-ACK feedback time and the sixth HARQ-ACK feedback time is not greater than a second maximum postpone length, where the second maximum postpone length is determined based on the first subcarrier spacing SCS or the second subcarrier spacing SCS.

It can be understood that similar to that the third HARQ-ACK transmission resource is determined based on the second subcarrier spacing SCS and the second carrier, since the PUCCH resource is configured on limited carriers of the network side, HARQ-ACK transmission cannot be infinitely postponed. Specifically, in this embodiment of this application, a maximum postpone length may be determined based on the first subcarrier spacing SCS or the second subcarrier spacing SCS, and the interval between the first HARQ-ACK feedback time or the SPS PDSCH and each of the fifth HARQ-ACK feedback time and the sixth HARQ-ACK feedback time is limited to be not greater than the maximum postpone length, so as to keep the determined second HARQ-ACK transmission resource within an available carrier range. For ease of distinction, the maximum postpone length therein may be referred to as a second maximum postpone length.

In this embodiment of this application, limiting the time interval between the first HARQ-ACK feedback time or the SPS PDSCH and each of the fifth HARQ-ACK feedback time and the sixth HARQ-ACK feedback time can keep the determined HARQ-ACK transmission resource within the available carrier range.

Optionally, that the terminal determines a first HARQ-ACK transmission resource based on a first subcarrier spacing SCS and a first carrier includes one of the following:

The terminal determines the first HARQ-ACK feedback time based on the first subcarrier spacing SCS; the terminal determines the first carrier based on the first HARQ-ACK feedback time; and the terminal determines the first HARQ-ACK transmission resource based on the first HARQ-ACK feedback time and the first carrier.

The terminal determines the first HARQ-ACK feedback time based on the first subcarrier spacing SCS and the first carrier; and the terminal determines the first HARQ-ACK transmission resource based on the first HARQ-ACK feedback time and the first carrier.

It can be understood that similar to that the third HARQ-ACK transmission resource is determined based on the second subcarrier spacing SCS and the second carrier in the foregoing embodiments, at least one of the ways listed above may be used for determining the first HARQ-ACK transmission resource based on the first subcarrier spacing SCS and the first carrier.

Alternatively, a HARQ-ACK feedback time may be determined first as the first HARQ-ACK feedback time based on the first subcarrier spacing SCS. Then, the first carrier is determined based on the first HARQ-ACK feedback time. Then, based on this, a corresponding HARQ-ACK transmission resource is determined as the first HARQ-ACK transmission resource based on the first HARQ-ACK feedback time and the determined first carrier.

Alternatively, the first HARQ-ACK feedback time may be determined first based on the first subcarrier spacing SCS and the first carrier, and the first HARQ-ACK transmission resource is then determined based on the first HARQ-ACK feedback time and the first carrier. When the first HARQ-ACK feedback time is determined based on the first subcarrier spacing SCS and the first carrier, a HARQ-ACK feedback time indication set corresponding to the first carrier may be determined first, and the set is then analyzed based on the first subcarrier spacing SCS so as to determine the first HARQ-ACK feedback time.

Optionally, that the terminal determines the first HARQ-ACK feedback time based on the first subcarrier spacing SCS includes at least one of the following:

the first HARQ-ACK feedback time is determined based on a HARQ-ACK feedback time indication set corresponding to the first subcarrier spacing SCS;

the first HARQ-ACK feedback time is determined based on a HARQ-ACK feedback time indication set configured for a cell group (cell group).

It can be understood that when the first HARQ-ACK feedback time is determined based on the first subcarrier spacing SCS, any time k can be indicated from the HARQ-ACK feedback time indication set preconfigured based on the first subcarrier spacing SCS or the HARQ-ACK feedback time indication set preconfigured for the cell group as the first HARQ-ACK feedback time.

The first subcarrier spacing SCS and the HARQ-ACK feedback time indication set may be configured based on a cell group, so the first subcarrier spacing SCS corresponds to the cell group.

In this embodiment of this application, the first HARQ-ACK feedback time is determined first, and then the first HARQ-ACK transmission resource is determined based on the HARQ-ACK feedback time in combination with the first carrier. This can determine an available resource in combination with subcarrier spacings of different carriers, ensuring reliable transmission.

Optionally, that the terminal determines the first HARQ-ACK feedback time based on the first subcarrier spacing SCS and the first carrier includes: The terminal determines the first HARQ-ACK feedback time based on the HARQ-ACK feedback time indication set corresponding to the first carrier.

It can be understood that based on the HARQ-ACK feedback time indication set (K1 set) corresponding to the first carrier, the terminal may indicate any HARQ-ACK feedback time from the set and determine the HARQ-ACK feedback time as the first HARQ-ACK feedback time. The first carrier may be correspondingly configured with one HARQ-ACK feedback time indication set, and the first HARQ-ACK feedback time may be determined by analyzing the set based on the first subcarrier spacing SCS.

Optionally, the method for determining a HARQ-ACK transmission resource further includes: The terminal determines the first carrier according to a network-side indication or a predefined rule. It can be understood that when determining the first carrier based on the first HARQ-ACK feedback time, the terminal may specifically determine the first carrier according to a network indication or a predefined rule.

To describe the technical solutions in the embodiments of this application more clearly, the following uses examples for description without limiting the protection scope of the embodiments of this application. For example, a method for determining a HARQ-ACK transmission resource according to an embodiment of this application may include the following processing steps.

(1) Determine a HARQ-ACK transmission resource based on a first SCS and a first carrier.

Optionally, a first HARQ-ACK feedback time is determined based on the first SCS, the first carrier is determined based on the first HARQ-ACK feedback time, and the HARQ-ACK transmission resource is determined based on the first HARQ-ACK feedback time and the first carrier.

Optionally, the first HARQ-ACK feedback time is determined based on a HARQ-ACK feedback time indication set (K1 set) corresponding to the first SCS.

Optionally, the first HARQ-ACK feedback time is determined based on a K1 set configured for a cell group.

Optionally, the first HARQ-ACK feedback time is determined based on the first SCS and the first carrier, and the HARQ-ACK transmission resource is determined based on the first HARQ-ACK feedback time and the first carrier.

Optionally, the first carrier is determined according to a network indication or a predefined rule.

Optionally, the first HARQ-ACK feedback time is determined based on a HARQ-ACK feedback time indication set (K1 set) corresponding to the first carrier.

Optionally, UE determines, based on the first SCS, an initial location (for example, slot n+k) for HARQ-ACK feedback, and determines a first carrier corresponding to the HARQ-ACK feedback. Specifically, k is defined based on the first SCS.

(2) In a case of no available HARQ-ACK transmission resource based on the first HARQ-ACK feedback time and the first carrier, determine a HARQ-ACK transmission resource after the first HARQ-ACK feedback time based on the first SCS and the first carrier.

Specifically, a second HARQ-ACK feedback time is determined based on the first SCS and the first carrier, where the second HARQ-ACK feedback time is after the first HARQ-ACK feedback time.

Optionally, a time interval including at least L time units is present between the second HARQ-ACK feedback time and a DL resource, where L is predefined or configured by a network.

Optionally, the second HARQ-ACK feedback time is determined based on the first SCS and the second SCS, where the second HARQ-ACK feedback time is after the first HARQ-ACK feedback time. Specifically, if the first SCS is $u_1$, the second SCS is $u_2$, and the first HARQ-ACK feedback time is slot x, the second HARQ-ACK feedback time is $\mathrm{slot}\left\lfloor x \cdot 2^{u_2 - u_1} \right\rfloor + \max(2^{u_2 - u_1}, 1)$.

(3) Step (2) is repeated until an available UL resource or a location corresponding to a maximum postpone time is determined. The location corresponding to the maximum postpone time is determined based on the first SCS or the second SCS.

Optionally, HARQ-ACK feedback is postponed first in time dimension, that is, the second HARQ-ACK feedback time is determined, until the available UL resource or the location corresponding to the maximum postpone time is found.

Specifically, an initial location for HARQ-ACK feedback is slot y, an SCS corresponding to slot y is a first SCS $u_1$, it is determined, based on a second SCS $u_2$, that a location corresponding to a maximum postpone time is $\mathrm{slot}\left\lfloor y \cdot 2^{u_2 - u_1} \right\rfloor + k + K_{def}$, and $K_{def}$ is determined based on the second SCS. $K_{def}$ or $k+K_{def}$ represents a maximum postpone time for a HARQ-ACK.

Specifically, a PDSCH reception location is slot z, an SCS corresponding to slot z is a first SCS $u_1$, it is determined, based on a second SCS, that a location corresponding to a maximum postpone time is $\mathrm{slot}\left\lfloor z \cdot 2^{u_2 - u_1} \right\rfloor + k + K_{def}$, and $K_{def}$ is determined based on the second SCS. $K_{def}$ or $k+K_{def}$ represents a maximum postpone time for a HARQ-ACK.

(4) If there is no available UL resource on the first carrier, that is, there is no available UL resource at locations from the initial location for HARQ-ACK feedback to the location corresponding to the maximum postpone time, carrier switching is performed to select a new first carrier for performing steps (1) and (2), where the new first carrier is selected from the remaining carriers according to a predefined rule (for example, an ascending or descending order of carriers).

The foregoing processing procedures may be simplified into the following processing procedures.

(1) Determine a HARQ-ACK transmission resource based on a first SCS and a first carrier.

(2) In a case of no available HARQ-ACK transmission resource based on the first HARQ-ACK feedback time and the first carrier, determine a HARQ-ACK transmission resource after the first HARQ-ACK feedback time based on the first SCS and the first carrier.

(3) Step (2) is repeated until an available UL resource or a location corresponding to a maximum postpone time is determined. The location corresponding to the maximum postpone time is determined based on the first SCS or a second SCS.

(4) If there is no available UL resource on the first carrier, that is, there is no available UL resource at locations from an initial location for HARQ-ACK feedback to the location corresponding to the maximum postpone time, carrier switching is performed to select a new first carrier for performing steps (1) and (2), where the new first carrier is selected from the remaining carriers according to a predefined rule.

It should be noted that the foregoing embodiments of this application may be described as follows.

TDD configurations or slot formats of the carriers are configured by the network.

For the PUCCH, switchable carriers (sets) are configured by the network or predefined as all carriers configured with the PUCCH resource. For example, for the foregoing N carriers, the network may configure one or more PUCCH cell timing patterns. Each pattern pattern indicates a PUCCH carrier available for a period of time, and different PUCCH cell timing patterns may indicate the same or different PUCCH carriers.

The available UL resource indicates that there are sufficient uplink resources on the carrier or the time-domain unit for PUCCH transmission, where the PUCCH includes the corresponding HARQ-ACK of the SPS PDSCH or may include other UCI. Alternatively, the available UL resource indicates that there are sufficient uplink resources on the carrier or the time-domain unit for PUSCH transmission, where the PUSCH is a dynamically scheduled or semi-persistently configured PUSCH, and UCI (including HARQ-ACK of the SPS PDSCH) is multiplexed on the PUSCH for transmission.

Another implementation of the embodiments of this application is that the UE does not expect both the HARQ-ACK postponing mechanism and the PUCCH carrier switching functionality with different subcarrier spacings to be enabled.

The technical solutions of the embodiments of this application are extended to be also applicable to unlicensed bands.

It should be noted that the method for determining a HARQ-ACK transmission resource provided in the embodiments of this application may be performed by an apparatus for determining a HARQ-ACK transmission resource, or a control module for performing the method for determining a HARQ-ACK transmission resource in the apparatus for determining a HARQ-ACK transmission resource. In the embodiments of this application, the method for determining a HARQ-ACK transmission resource performed by the apparatus for determining a HARQ-ACK transmission resource is used as an example to describe the apparatus for determining a HARQ-ACK transmission resource provided in the embodiments of this application.

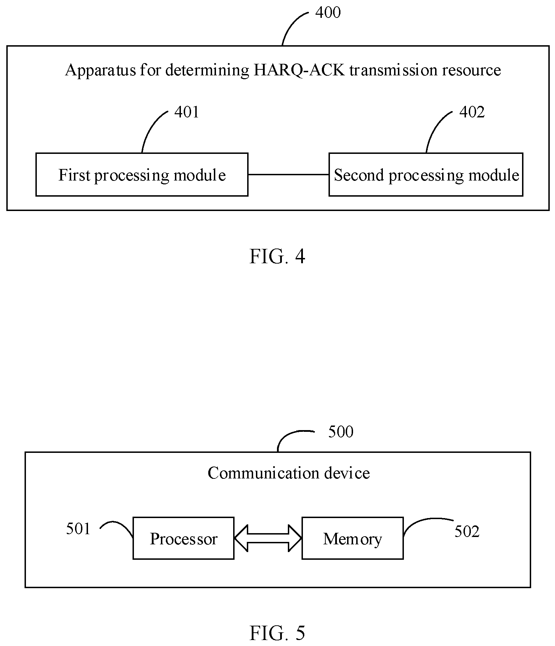

FIG. 4 is a schematic structural diagram of an apparatus for determining a HARQ-ACK transmission resource according to an embodiment of this application. The apparatus 400 is configured to determine the HARQ-ACK transmission resource in the method for determining a HARQ-ACK transmission resource in the foregoing embodiments. The apparatus includes a first processing module 401 and a second processing module 402.

The first processing module 401 is configured to determine a first HARQ-ACK transmission resource based on a first subcarrier spacing SCS and a first carrier. The second processing module 402 is configured to: in a case of determining that the first HARQ-ACK transmission resource is unavailable, determine a second HARQ-ACK transmission resource after a first HARQ-ACK feedback time based on the first subcarrier spacing SCS and the first carrier, or determine a third HARQ-ACK transmission resource after the first HARQ-ACK feedback time based on a second subcarrier spacing SCS and a second carrier.

The first HARQ-ACK feedback time is determined based on the first subcarrier spacing SCS or based on the first subcarrier spacing SCS and the first carrier.

The apparatus for determining a HARQ-ACK transmission resource provided in this embodiment of this application determines a HARQ-ACK transmission resource based on a subcarrier spacing SCS of a carrier and the carrier, and postpones transmission of a HARQ-ACK to a subsequent available uplink resource in a case that the determined HARQ-ACK transmission resource is unavailable, which can effectively ensure reliable HARQ-ACK transmission and improve the performance of SPS PDSCH transmission.

In a case of determining a third HARQ-ACK transmission resource after the first HARQ-ACK feedback time based on a second subcarrier spacing SCS and a second carrier, the second processing module is configured to perform at least one of the following:

determining a second HARQ-ACK feedback time after the first HARQ-ACK feedback time based on the second subcarrier spacing SCS, determining the second carrier based on the second HARQ-ACK feedback time, and determining the third HARQ-ACK transmission resource based on the second HARQ-ACK feedback time and the second carrier; determining a third HARQ-ACK feedback time based on the second subcarrier spacing SCS and the second carrier, and determining the third HARQ-ACK transmission resource based on the third HARQ-ACK feedback time and the second carrier; and determining a fourth HARQ-ACK feedback time after the first HARQ-ACK feedback time based on the first subcarrier spacing SCS and the second subcarrier spacing SCS, and determining the third HARQ-ACK transmission resource based on the fourth HARQ-ACK feedback time and the second carrier.

In this embodiment of this application, a HARQ-ACK feedback time after the first HARQ-ACK feedback time is determined first, and then the third HARQ-ACK transmission resource is determined based on the HARQ-ACK feedback time in combination with the second carrier. This can determine an available resource in combination with subcarrier spacings of different carriers, ensuring reliable transmission.

Optionally, in a case of determining a second HARQ-ACK feedback time after the first HARQ-ACK feedback time based on the second subcarrier spacing SCS, the second processing module is configured to:

determine whether there is an available uplink resource on the first carrier within the first HARQ-ACK feedback time;

in a case that there is no available uplink resource on the first carrier within the first HARQ-ACK feedback time, determine a postpone time based on the second subcarrier spacing SCS; and

determining the second HARQ-ACK feedback time based on the first HARQ-ACK feedback time and the postpone time.

In this embodiment of this application, determining a given postpone time based on the second subcarrier spacing SCS and determining the second HARQ-ACK feedback time based on the postpone time can enable a terminal to search an available HARQ-ACK transmission resource on a same carrier without the need for carrier hopping. This features higher efficiency.

Optionally, the third HARQ-ACK feedback time is after the first HARQ-ACK feedback time.

Optionally, a time interval between a HARQ-ACK transmission resource and a downlink DL resource for time division duplex TDD is not less than a preset threshold, where the HARQ-ACK transmission resource is determined based on at least one of the second HARQ-ACK feedback time, the third HARQ-ACK feedback time, and the fourth HARQ-ACK feedback time, and the preset threshold includes a predetermined number of time units configured by a network-side device or predefined by the terminal.

In this embodiment of this application, limiting the time interval between the third HARQ-ACK transmission resource and the DL resource can more quickly obtain an available third HARQ-ACK transmission resource.

Further, an interval between the first HARQ-ACK feedback time or a semi-persistent scheduling SPS physical downlink shared channel PDSCH and each of the second HARQ-ACK feedback time, the third HARQ-ACK feedback time, and the fourth HARQ-ACK feedback time is not greater than a first maximum postpone length.

The first maximum postpone length is determined based on the first subcarrier spacing SCS or the second subcarrier spacing SCS.

In this embodiment of this application, limiting the time interval between the first HARQ-ACK feedback time or the SPS PDSCH and each of the second HARQ-ACK feedback time, the third HARQ-ACK feedback time, and the fourth HARQ-ACK feedback time can keep the determined HARQ-ACK transmission resource within an available carrier range.

Additionally, in a case of determining a second HARQ-ACK transmission resource after a first HARQ-ACK feedback time based on the first subcarrier spacing SCS and the first carrier, the second processing module is configured to perform at least one of the following:

determining a fifth HARQ-ACK feedback time after the first HARQ-ACK feedback time based on the first subcarrier spacing SCS and the first carrier, and determining the second HARQ-ACK transmission resource based on the fifth HARQ-ACK feedback time and the first carrier; and

determining a sixth HARQ-ACK feedback time after the first HARQ-ACK feedback time based on the first subcarrier spacing SCS and the second subcarrier spacing SCS, and determining the second HARQ-ACK transmission resource based on the sixth HARQ-ACK feedback time and the first carrier.

In this embodiment of this application, a HARQ-ACK feedback time after the first HARQ-ACK feedback time is determined first, and then the second HARQ-ACK transmission resource is determined based on the HARQ-ACK feedback time in combination with the first carrier. This can determine an available resource in combination with subcarrier spacings of different carriers, ensuring reliable transmission.

Optionally, a time interval between the fifth HARQ-ACK feedback time and a downlink DL resource for time division duplex TDD is not less than a preset threshold, where the preset threshold includes a predetermined number of time units configured by a network-side device or predefined by the terminal.

In this embodiment of this application, limiting the time interval between the second HARQ-ACK transmission resource and the DL resource can more quickly obtain an available second HARQ-ACK transmission resource.

Optionally, an interval between the first HARQ-ACK feedback time or a semi-persistent scheduling SPS physical downlink shared channel PDSCH and each of the fifth HARQ-ACK feedback time and the sixth HARQ-ACK feedback time is not greater than a second maximum postpone length.

The second maximum postpone length is determined based on the first subcarrier spacing SCS or the second subcarrier spacing SCS.

In this embodiment of this application, limiting the time interval between the first HARQ-ACK feedback time or the SPS PDSCH and each of the fifth HARQ-ACK feedback time and the sixth HARQ-ACK feedback time can keep the determined HARQ-ACK transmission resource within an available carrier range.

Optionally, in a case of determining a first HARQ-ACK transmission resource based on a first subcarrier spacing SCS and a first carrier, the first processing module is configured to perform one of the following:

determining the first HARQ-ACK feedback time based on the first subcarrier spacing SCS, determining the first carrier based on the first HARQ-ACK feedback time, and determining the first HARQ-ACK transmission resource based on the first HARQ-ACK feedback time and the first carrier; and

determining the first HARQ-ACK feedback time based on the first subcarrier spacing SCS and the first carrier, and determining the first HARQ-ACK transmission resource based on the first HARQ-ACK feedback time and the first carrier.

In this embodiment of this application, the first HARQ-ACK feedback time is determined first, and then the first HARQ-ACK transmission resource is determined based on the HARQ-ACK feedback time in combination with the first carrier. This can determine an available resource in combination with subcarrier spacings of different carriers, ensuring reliable transmission.

Optionally, in a case of determining the first HARQ-ACK feedback time based on the first subcarrier spacing SCS, the first processing module is configured to perform at least one of the following:

determining the first HARQ-ACK feedback time based on a HARQ-ACK feedback time indication set corresponding to the first subcarrier spacing SCS; and

determining the first HARQ-ACK feedback time based on a HARQ-ACK feedback time indication set configured for a cell group.

Optionally, in a case of determining the first HARQ-ACK feedback time based on the first subcarrier spacing SCS and the first carrier, the first processing module is configured to:

determine the first HARQ-ACK feedback time based on a HARQ-ACK feedback time indication set corresponding to the first carrier.

Optionally, the apparatus further includes a third processing module configured to determine the first carrier according to a network-side indication or a predefined rule.

Optionally, the first carrier and/or the second carrier is determined based on one of the following:

a carrier with a smallest number in carriers configured with a physical uplink control channel PUCCH resource;

a carrier with a largest number in carriers configured with a physical uplink control channel PUCCH resource;

a carrier corresponding to a current location in a physical uplink control channel PUCCH cell timing pattern;

a carrier determined according to an order of numbers of multiple carriers in a case that the first carrier and/or the second carrier corresponds to the multiple carriers;

a carrier of a semi-persistent scheduling SPS physical downlink shared channel PDSCH received by the terminal;

a carrier for uplink transmission indicated by downlink control information DCI;

a primary carrier, a primary cell PCell, or a primary secondary cell PScell; and

a secondary cell SCell.

Optionally, the first subcarrier spacing SCS and/or the second subcarrier spacing SCS is determined based on one of the following:

a reference subcarrier spacing SCS configured by a network-side device;

a subcarrier spacing SCS uniformly configured by the network-side device for a cell group;

a subcarrier spacing SCS corresponding to a carrier with a smallest number in carriers configured with a physical uplink control channel PUCCH resource;

a subcarrier spacing SCS corresponding to a carrier with a largest number in carriers configured with a physical uplink control channel PUCCH resource;

a subcarrier spacing SCS of a carrier corresponding to a current location in a physical uplink control channel PUCCH cell timing pattern;

a subcarrier spacing SCS of a carrier determined according to an order of numbers of multiple carriers in a case that the first carrier and/or the second carrier corresponds to the multiple carriers, or a subcarrier spacing SCS determined according to an order of subcarrier spacings SCSs of the multiple carriers;

a subcarrier spacing SCS of a carrier of a semi-persistent scheduling SPS physical downlink shared channel PDSCH received by the terminal;

a subcarrier spacing SCS of a carrier for uplink transmission indicated by downlink control information DCI;

a subcarrier spacing SCS of a primary carrier, a primary cell PCell, or a primary secondary cell PScell; and

a subcarrier spacing SCS of a secondary cell SCell.

The apparatus for determining a HARQ-ACK transmission resource in this embodiment of this application may be an apparatus or an apparatus or electronic device having an operating system, or may be a component, an integrated circuit, or a chip in a terminal. The apparatus or electronic device may be a mobile terminal or a non-mobile terminal. For example, the mobile terminal may include but is not limited to the types of the terminal 101 listed above, and the non-mobile terminal may be a server, a network attached storage (Network Attached Storage, NAS), a personal computer (personal computer, PC), a television (television, TV), a teller machine, a self-service machine, or the like, which are not specifically limited in this embodiment of this application.

The apparatus for determining a HARQ-ACK transmission resource provided in this embodiment of this application is capable of implementing processes that are implemented by the method embodiments of FIG. 2 and FIG. 3, with the same technical effects achieved. To avoid repetition, details are not described herein again.

As shown in FIG. 5, an embodiment of this application further provides a communication device 500 including a processor 501, a memory 502, and a program or instructions stored on the memory 502 and executable on the processor 501. In a case that the communication device is a terminal, when the program or instructions are executed by the processor 501, the processes of the method for determining a HARQ-ACK transmission resource in the foregoing embodiments can be implemented, with the same technical effects achieved. To avoid repetition, details are not described herein again.

An embodiment of this application further provides a terminal. The terminal includes a processor and a communication interface. The processor is configured to: determine a first HARQ-ACK transmission resource based on a first subcarrier spacing SCS and a first carrier; in a case of determining that the first HARQ-ACK transmission resource is unavailable, determine a second HARQ-ACK transmission resource after a first HARQ-ACK feedback time based on the first subcarrier spacing SCS and the first carrier, or determine a third HARQ-ACK transmission resource after the first HARQ-ACK feedback time based on a second subcarrier spacing SCS and a second carrier, where the first HARQ-ACK feedback time is determined based on the first subcarrier spacing SCS or based on the first subcarrier spacing SCS and the first carrier. This terminal embodiment corresponds to the foregoing method embodiment on the terminal side. All processes and implementations in the foregoing method embodiments can be applicable to this terminal embodiment, with the same technical effects achieved.

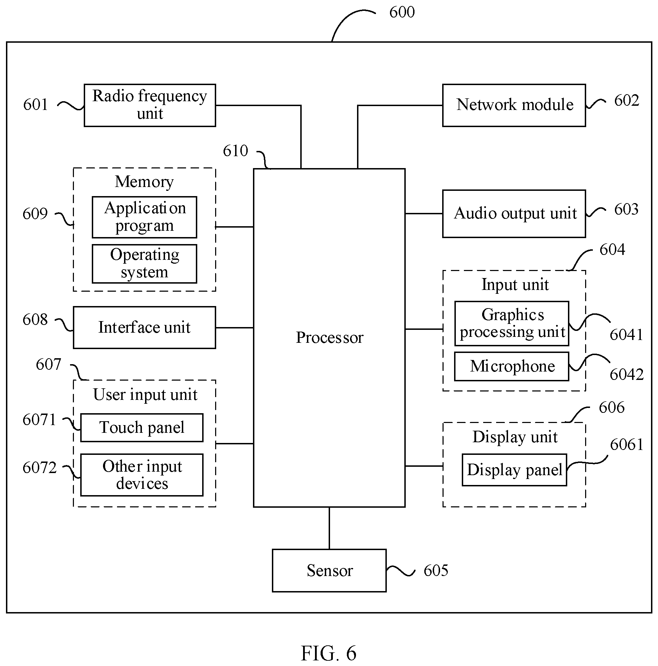

Specifically, FIG. 6 is a schematic diagram of a hardware structure of a terminal for implementing an embodiment of this application. The terminal 600 includes but is not limited to at least some of components such as a radio frequency unit 601, a network module 602, an audio output unit 603, an input unit 604, a sensor 605, a display unit 606, a user input unit 607, an interface unit 608, a memory 609, and a processor 610.

It can be understood by those skilled in the art that the terminal 600 may further include a power supply (for example, a battery) supplying power to the components. The power supply may be logically connected to the processor 610 via a power management system, so that functions such as charge management, discharge management, and power consumption management are implemented by using the power management system. The structure of the terminal shown in FIG. 6 does not constitute any limitation on the terminal, and the terminal may include more or fewer components than shown in the figure, or combine some of the components, or have different arrangements of the components. Details are not described herein.

It should be understood that in this embodiment of this application, the input unit 604 may include a graphics processing unit (Graphics Processing Unit, GPU) 6041 and a microphone 6042. The graphics processing unit 6041 processes image data of a static picture or a video that is obtained by an image capture apparatus (for example, a camera) in a video capture mode or an image capture mode. The display unit 606 may include a display panel 6061. The display panel 6061 may be configured in a form of a liquid crystal display, an organic light-emitting diode display, or the like. The user input unit 607 includes a touch panel 6071 and other input devices 6072. The touch panel 6071 is also referred to as a touchscreen. The touch panel 6071 may include two parts: a touch detection apparatus and a touch controller. The other input devices 6072 may include but are not limited to a physical keyboard, a functional button (such as a volume control button or a power on/off button), a trackball, a mouse, and a joystick. Details are not described herein.

In this embodiment of this application, the radio frequency unit 601 transmits downlink data received from a network-side device to the processor 610 for processing, and in addition, transmits uplink data to the network-side device. Generally, the radio frequency unit 601 includes but is not limited to an antenna, at least one amplifier, a transceiver, a coupler, a low noise amplifier, and a duplexer.

The memory 609 may be configured to store software programs or instructions and various data. The memory 609 may include a program or instruction storage area and a data storage area. The program or instruction storage area may store an operating system, an application program or instructions required by at least one function (for example, sound play function or image play function), and the like. In addition, the memory 609 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, flash memory device, or other non-volatile solid-state storage device.

The processor 610 may include one or more processing units. Optionally, the processor 610 may integrate an application processor and a modem processor. The application processor mainly processes an operating system, a user interface, application programs or instructions, and the like. The modem processor mainly processes wireless communication, for example, being a baseband processor. It can be understood that the modem processor may alternatively be not integrated in the processor 610.

The processor 610 is configured to: determine a first HARQ-ACK transmission resource based on a first subcarrier spacing SCS and a first carrier; and in a case of determining that the first HARQ-ACK transmission resource is unavailable, determine a second HARQ-ACK transmission resource after a first HARQ-ACK feedback time based on the first subcarrier spacing SCS and the first carrier, or determine a third HARQ-ACK transmission resource after the first HARQ-ACK feedback time based on a second subcarrier spacing SCS and a second carrier.

The first HARQ-ACK feedback time is determined based on the first subcarrier spacing SCS or based on the first subcarrier spacing SCS and the first carrier.

The terminal provided in this embodiment of this application determines a HARQ-ACK transmission resource based on a subcarrier spacing SCS of a carrier and the carrier, and postpones transmission of a HARQ-ACK to a subsequent available uplink resource in a case that the determined HARQ-ACK transmission resource is unavailable, which can effectively ensure reliable HARQ-ACK transmission and improve the performance of SPS PDSCH transmission.

The processor 610 is further configured to perform at least one of the following:

> determining a second HARQ-ACK feedback time after the first HARQ-ACK feedback time based on the second subcarrier spacing SCS, determining the second carrier based on the second HARQ-ACK feedback time, and determining the third HARQ-ACK transmission resource based on the second HARQ-ACK feedback time and the second carrier;
> determining a third HARQ-ACK feedback time based on the second subcarrier spacing SCS and the second carrier, and determining the third HARQ-ACK transmission resource based on the third HARQ-ACK feedback time and the second carrier; and
> determining a fourth HARQ-ACK feedback time after the first HARQ-ACK feedback time based on the first subcarrier spacing SCS and the second subcarrier spacing SCS, and determining the third HARQ-ACK transmission resource based on the fourth HARQ-ACK feedback time and the second carrier.

In this embodiment of this application, a HARQ-ACK feedback time after the first HARQ-ACK feedback time is determined first, and then the third HARQ-ACK transmission resource is determined based on the HARQ-ACK feedback time in combination with the second carrier. This can determine an available resource in combination with subcarrier spacings of different carriers, ensuring reliable transmission.

Optionally, the processor 610 is further configured to:

> determine whether there is an available uplink resource on the first carrier within the first HARQ-ACK feedback time;
> in a case that there is no available uplink resource on the first carrier within the first HARQ-ACK feedback time, determine a postpone time based on the second subcarrier spacing SCS; and
> determine the second HARQ-ACK feedback time based on the first HARQ-ACK feedback time and the postpone time.

In this embodiment of this application, determining a given postpone time based on the second subcarrier spacing SCS and determining the second HARQ-ACK feedback time based on the postpone time can enable the terminal to search an available HARQ-ACK transmission resource on a same carrier without the need for carrier hopping. This features higher efficiency.

The processor 610 is further configured to perform at least one of the following:

> determining a fifth HARQ-ACK feedback time after the first HARQ-ACK feedback time based on the first subcarrier spacing SCS and the first carrier, and determining the second HARQ-ACK transmission resource based on the fifth HARQ-ACK feedback time and the first carrier; and
> determining a sixth HARQ-ACK feedback time after the first HARQ-ACK feedback time based on the first subcarrier spacing SCS and the second subcarrier spacing SCS, and determining the second HARQ-ACK transmission resource based on the sixth HARQ-ACK feedback time and the first carrier.

In this embodiment of this application, a HARQ-ACK feedback time after the first HARQ-ACK feedback time is determined first, and then the second HARQ-ACK transmission resource is determined based on the HARQ-ACK feedback time in combination with the first carrier. This can determine an available resource in combination with subcarrier spacings of different carriers, ensuring reliable transmission.

Optionally, the processor 610 is further configured to perform one of the following:

> determining the first HARQ-ACK feedback time based on the first subcarrier spacing SCS, determining the first carrier based on the first HARQ-ACK feedback time, and determining the first HARQ-ACK transmission resource based on the first HARQ-ACK feedback time and the first carrier; and
> determining the first HARQ-ACK feedback time based on the first subcarrier spacing SCS and the first carrier, and determining the first HARQ-ACK transmission resource based on the first HARQ-ACK feedback time and the first carrier.

In this embodiment of this application, the first HARQ-ACK feedback time is determined first, and then the first HARQ-ACK transmission resource is determined based on the HARQ-ACK feedback time in combination with the first carrier. This can determine an available resource in combination with subcarrier spacings of different carriers, ensuring reliable transmission.

Optionally, the processor 610 is further configured to perform at least one of the following:

determining the first HARQ-ACK feedback time based on a HARQ-ACK feedback time indication set corresponding to the first subcarrier spacing SCS; and

determining the first HARQ-ACK feedback time based on a HARQ-ACK feedback time indication set configured for a cell group.

Optionally, the processor 610 is further configured to determine the first HARQ-ACK feedback time based on a HARQ-ACK feedback time indication set corresponding to the first carrier.

Optionally, the processor 610 is further configured to determine the first carrier according to a network-side indication or a predefined rule.

An embodiment of this application further provides a readable storage medium, where the readable storage medium stores a program or instructions, and when the program or instructions are executed by a processor, the processes of the method for determining a HARQ-ACK transmission resource in the foregoing embodiments are implemented, with the same technical effects achieved. To avoid repetition, details are not described herein again.

The processor is a processor in the terminal described in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled to the processor. The processor is configured to run a program or instructions to implement the processes of the method for determining a HARQ-ACK transmission resource in the foregoing embodiments, with the same technical effect achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program/program product. The computer program/program product is stored in a non-volatile storage medium, and when the program/program product is executed by at least one processor, the processes of the method for determining a HARQ-ACK transmission resource in the foregoing embodiments are implemented, with the same technical effects achieved. To avoid repetition, details are not described herein again.

It should be noted that in this specification, the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more constraints, an element preceded by "includes a..." does not preclude the presence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

By means of the foregoing description of the implementations, persons skilled in the art may clearly understand that the method in the foregoing embodiments may be implemented by software with a necessary general hardware platform. Certainly, the method in the foregoing embodiments may alternatively be implemented by hardware. However, in many cases, the former is a preferred implementation. Based on such an understanding, the technical solutions of this application essentially, or the part contributing to the prior art may be implemented in a form of a software product. The computer software product is stored in a storage medium (for example, a ROM/RAM, a magnetic disk, or an optical disc), and includes several instructions for instructing a terminal (which may be a mobile phone, a computer, a server, a network device, or the like) to perform the method described in the embodiments of this application.

The foregoing describes the embodiments of this application with reference to the accompanying drawings. However, this application is not limited to the foregoing specific implementations. These specific implementations are merely illustrative rather than restrictive.

**Claims**

1. A method for determining a HARQ-ACK transmission resource comprising:

determining (201), by a terminal, a first HARQ-ACK transmission resource based on a first subcarrier spacing, SCS, and a first carrier; and in a case of determining that the first HARQ-ACK transmission resource is unavailable, determining (202), by the terminal, a second HARQ-ACK transmission resource after a first HARQ-ACK feedback time based on the first SCS and the first carrier, or determining (202) a third HARQ-ACK transmission resource after the first HARQ-ACK feedback time based on a second SCS and a second carrier, wherein the first HARQ-ACK feedback time is determined based on the first SCS and the first carrier;

wherein the determining (202), by the terminal, a second HARQ-ACK transmission resource after a first HARQ-ACK feedback time based on the first SCS and the first carrier comprises: determining a sixth HARQ-ACK feedback time after the first HARQ-ACK feedback time based on the first SCS and the second SCS, and determining the second HARQ-ACK transmission resource based on the sixth HARQ-ACK feedback time and the first carrier; or

wherein the determining (202) a third HARQ-ACK transmission resource after the first HARQ-ACK feedback time based on a second SCS and a second carrier comprises:

> determining a third HARQ-ACK feedback time based on the second SCS and the second carrier, and determining the third HARQ-ACK transmission resource based on the third HARQ-ACK feedback time and the second carrier; an interval between a semi-persistent scheduling, SPS, physical downlink shared channel, PDSCH, and the third HARQ-ACK feedback time is not greater than a first maximum postpone length, wherein the first maximum postpone length is determined based on the first SCS or the second SCS; and
> determining a fourth HARQ-ACK feedback time after the first HARQ-ACK feedback time based on the first SCS and the second SCS, and determining the third HARQ-ACK transmission resource based on the fourth HARQ-ACK feedback time and the second carrier.

2. The method for determining a HARQ-ACK transmission resource according to claim 1, wherein the third HARQ-ACK feedback time is after the first HARQ-ACK feedback time.

3. The method for determining a HARQ-ACK transmission resource according to claim 1, wherein an interval between the first HARQ-ACK feedback time or the semi-persistent scheduling, SPS, physical downlink shared channel, PDSCH, and the fourth HARQ-ACK feedback time is not greater than the first maximum postpone length.

4. The method for determining a HARQ-ACK transmission resource according to claim 1, wherein an interval between the first HARQ-ACK feedback time or the semi-persistent scheduling, SPS, physical downlink shared channel, PDSCH, and the sixth HARQ-ACK feedback time is not greater than a second maximum postpone length, wherein the second maximum postpone length is determined based on the first SCS or the second SCS.

5. The method for determining a HARQ-ACK transmission resource according to claim 1, wherein the determining (201), by a terminal, a first HARQ-ACK transmission resource based on a first SCS and a first carrier comprises one of the following:

> determining, by the terminal, the first HARQ-ACK feedback time based on the first SCS; determining, by the terminal, the first carrier based on the first HARQ-ACK feedback time; and determining, by the terminal, the first HARQ-ACK transmission resource based on the first HARQ-ACK feedback time and the first carrier; and
> determining, by the terminal, the first HARQ-ACK feedback time based on the first SCS and the first carrier; and determining, by the terminal, the first HARQ-ACK transmission resource based on the first HARQ-ACK feedback time and the first carrier.

6. The method for determining a HARQ-ACK transmission resource according to claim 5, wherein the determining, by the terminal, the first HARQ-ACK feedback time based on the first SCS comprises at least one of the following:

> determining the first HARQ-ACK feedback time based on a HARQ-ACK feedback time indication set corresponding to the first SCS; determining the first HARQ-ACK feedback time based on a HARQ-ACK feedback time indication set configured for a cell group.

7. The method for determining a HARQ-ACK transmission resource according to claim 5, wherein the determining, by the terminal, the first HARQ-ACK feedback time based on the first SCS and the first carrier comprises: determining, by the terminal, the first HARQ-ACK feedback time based on a HARQ-ACK feedback time indication set corresponding to the first carrier.

8. The method for determining a HARQ-ACK transmission resource according to any one of claims 1 to 7, wherein the first carrier and/or the second carrier is determined based on one of the following:

> a carrier with a smallest number in carriers configured with a physical uplink control channel, PUCCH, resource;
> a carrier with a largest number in carriers configured with a PUCCH resource;
> a carrier corresponding to a current location in a PUCCH cell timing pattern;
a carrier determined according to an order of numbers of multiple carriers in a case that the first carrier and/or the second carrier corresponds to the multiple carriers;
a carrier of the semi-persistent scheduling, SPS, physical downlink shared channel, PDSCH, received by the terminal;
a carrier for uplink transmission indicated by downlink control information, DCI;
a primary carrier, a primary cell, PCell, or a primary secondary cell, PScell; and
a secondary cell, SCell.

9. The method for determining a HARQ-ACK transmission resource according to any one of claims 1 to 7, wherein the first SCS and/or the second SCS is determined based on one of the following:

   a reference SCS configured by a network-side device;
   a SCS uniformly configured by the network-side device for a cell group;
   a SCS corresponding to a carrier with a smallest number in carriers configured with a physical uplink control channel, PUCCH, resource;
   a SCS corresponding to a carrier with a largest number in carriers configured with a PUCCH resource;
   a SCS of a carrier corresponding to a current location in a PUCCH cell timing pattern;
   a SCS of a carrier determined according to an order of numbers of multiple carriers in a case that the first carrier and/or the second carrier corresponds to the multiple carriers, or a SCS determined according to an order of SCSs of the multiple carriers;
   a SCS of a carrier of the semi-persistent scheduling, SPS, physical downlink shared channel, PDSCH, received by the terminal;
   a SCS of a carrier for uplink transmission indicated by downlink control information, DCI;
   a SCS of a primary carrier, a primary cell, PCell, or a primary secondary cell, PScell; and
   a SCS of a secondary cell, SCell.

10. A terminal (600), comprising a processor (610), a memory (609), and a program or instructions stored in the memory (609) and executable on the processor (610), wherein when the program or instructions are executed by the processor (610), the steps of the method for determining a HARQ-ACK transmission resource according to any one of claims 1 to 9 are implemented.

11. A readable storage medium, wherein the readable storage medium stores a program or instructions, and when the program or instructions are executed by a processor (610), the program or instructions cause the processor (610) to implement the steps of the method for determining a HARQ-ACK transmission resource according to any one of claims 1 to 9.

**Patentansprüche**

1. Ein Verfahren zum Bestimmen einer HARQ-ACK-Übertragungsressource, das Folgendes beinhaltet:

   Bestimmen (201), durch ein Endgerät, einer ersten HARQ-ACK-Übertragungsressource basierend auf einem ersten Zwischenträgerabstand, SCS, und einem ersten Träger; und
   in einem Fall des Bestimmens, dass die erste HARQ-ACK-Übertragungsressource nicht verfügbar ist, Bestimmen (202), durch das Endgerät, einer zweiten HARQ-ACK-Übertragungsressource nach einer ersten HARQ-ACK-Rückmeldungszeit basierend auf dem ersten SCS und dem ersten Träger, oder Bestimmen (202) einer dritten HARQ-ACK-Übertragungsressource nach der ersten HARQ-ACK-Rückmeldungszeit basierend auf einem zweiten SCS und einem zweiten Träger, wobei die erste HARQ-ACK-Rückmeldungszeit basierend auf dem ersten SCS und dem ersten Träger bestimmt wird;
   wobei das Bestimmen (202), durch das Endgerät, einer zweiten HARQ-ACK-Übertragungsressource nach einer ersten HARQ-ACK-Rückmeldungszeit basierend auf dem ersten SCS und dem ersten Träger Folgendes beinhaltet:

      Bestimmen einer sechsten HARQ-ACK-Rückmeldungszeit nach der ersten HARQ-ACK-Rückmeldungszeit basierend auf dem ersten SCS und dem zweiten SCS und Bestimmen der zweiten HARQ-ACK-Übertragungsressource basierend auf der sechsten HARQ-ACK-Rückmeldungszeit und dem ersten Träger; oder
      wobei das Bestimmen (202) einer dritten HARQ-ACK-Übertragungsressource nach der ersten HARQ-ACK-Rückmeldungszeit basierend auf einem zweiten SCS und einem zweiten Träger Folgendes beinhaltet:

         Bestimmen einer dritten HARQ-ACK-Rückmeldungszeit basierend auf dem zweiten SCS und dem zweiten Träger und Bestimmen der dritten HARQ-ACK-Übertragungsressource basierend auf der dritten HARQ-ACK-Rückmeldungszeit und dem zweiten Träger; wobei ein Intervall zwischen einem Physical Downlink Shared Channel, PDSCH, mit semipersistentem Scheduling, SPS, und der dritten HARQ-ACK-Rückmeldungszeit nicht größer als eine erste maximale Verzögerungslänge ist, wobei die erste maximale Verzögerungslänge basierend auf dem ersten SCS oder dem zweiten SCS bestimmt wird; und

Bestimmen einer vierten HARQ-ACK-Rückmeldungszeit nach der ersten HARQ-ACK-Rückmeldungszeit basierend auf dem ersten SCS und dem zweiten SCS und Bestimmen der dritten HARQ-ACK-Übertragungsressource basierend auf der vierten HARQ-ACK-Rückmeldungszeit und dem zweiten Träger.

2. Verfahren zum Bestimmen einer HARQ-ACK-Übertragungsressource gemäß Anspruch 1, wobei die dritte HARQ-ACK-Rückmeldungszeit nach der ersten HARQ-ACK-Rückmeldungszeit liegt.

3. Verfahren zum Bestimmen einer HARQ-ACK-Übertragungsressource gemäß Anspruch 1, wobei ein Intervall zwischen der ersten HARQ-ACK-Rückmeldungszeit oder dem Physical Downlink Shared Channel, PDSCH, mit semipersistentem Scheduling, SPS, und der vierten HARQ-ACK-Rückmeldungszeit nicht größer als die erste maximale Verzögerungslänge ist.

4. Verfahren zum Bestimmen einer HARQ-ACK-Übertragungsressource gemäß Anspruch 1, wobei ein Intervall zwischen der ersten HARQ-ACK-Rückmeldungszeit oder dem Physical Downlink Shared Channel, PDSCH, mit semipersistentem Scheduling, SPS, und der sechsten HARQ-ACK-Rückmeldungszeit nicht größer als eine zweite maximale Verzögerungslänge ist, wobei die zweite maximale Verzögerungslänge basierend auf dem ersten SCS oder dem zweiten SCS bestimmt wird.

5. Verfahren zum Bestimmen einer HARQ-ACK-Übertragungsressource gemäß Anspruch 1, wobei das Bestimmen (201), durch ein Endgerät, einer ersten HARQ-ACK-Übertragungsressource basierend auf einem ersten SCS und einem ersten Träger eines der Folgenden beinhaltet:

Bestimmen, durch das Endgerät, der ersten HARQ-ACK-Rückmeldungszeit basierend auf dem ersten SCS; Bestimmen, durch das Endgerät, des ersten Trägers basierend auf der ersten HARQ-ACK-Rückmeldungszeit; und Bestimmen, durch das Endgerät, der ersten HARQ-ACK-Übertragungsressource basierend auf der ersten HARQ-ACK-Rückmeldungszeit und dem ersten Träger; und

Bestimmen, durch das Endgerät, der ersten HARQ-ACK-Rückmeldungszeit basierend auf dem ersten SCS und dem ersten Träger; und Bestimmen, durch das Endgerät, der ersten HARQ-ACK-Übertragungsressource basierend auf der ersten HARQ-ACK-Rückmeldungszeit und dem ersten Träger.

6. Verfahren zum Bestimmen einer HARQ-ACK-Übertragungsressource gemäß Anspruch 5, wobei das Bestimmen, durch das Endgerät, der ersten HARQ-ACK-Rückmeldungszeit basierend auf dem ersten SCS mindestens eines der Folgenden beinhaltet:

Bestimmen der ersten HARQ-ACK-Rückmeldungszeit basierend auf einem HARQ-ACK-Rückmeldungszeit-Anzeigesatz, der dem ersten SCS entspricht;
Bestimmen der ersten HARQ-ACK-Rückmeldungszeit basierend auf einem HARQ-ACK-Rückmeldungszeit-Anzeigesatz, der für eine Zellengruppe konfiguriert ist.

7. Verfahren zum Bestimmen einer HARQ-ACK-Übertragungsressource gemäß Anspruch 5, wobei das Bestimmen, durch das Endgerät, der ersten HARQ-ACK-Rückmeldungszeit basierend auf dem ersten SCS und dem ersten Träger Folgendes beinhaltet: Bestimmen, durch das Endgerät, der ersten HARQ-ACK-Rückmeldungszeit basierend auf einem HARQ-ACK-Rückmeldungszeit-Anzeigesatz, der dem ersten Träger entspricht.

8. Verfahren zum Bestimmen einer HARQ-ACK-Übertragungsressource gemäß einem der Ansprüche 1 bis 7, wobei der erste Träger und/oder der zweite Träger basierend auf einem der Folgenden bestimmt wird:

einem Träger mit einer kleinsten Anzahl von Trägern, die mit einer Physical-Uplink Control-Channel-Ressource, PUCCH-Ressource, konfiguriert sind;
einem Träger mit einer größten Anzahl von Trägern, die mit einer PUCCH-Ressource konfiguriert sind;
einem Träger, der einer aktuellen Position in einem PUCCH-Zellen-Timing-Muster entspricht;
einem Träger, der gemäß einer Reihenfolge von Anzahlen von mehreren Trägern bestimmt wird, falls der erste Träger und/oder der zweite Träger den mehreren Trägern entspricht;
einem Träger des Physical Downlink Shared Channel, PDSCH, mit semipersistentem Scheduling, SPS, der von dem Endgerät empfangen wird;
einem Träger zur Uplink-Übertragung, der durch Downlink-Steuerungsinformationen, DCI, angezeigt wird;

einem primären Träger, einer primären Zelle, PCell, oder einer primären sekundären Zelle, PScell; und

einer sekundären Zelle, SCell.

9. Verfahren zum Bestimmen einer HARQ-ACK-Übertragungsressource gemäß einem der Ansprüche 1 bis 7, wobei der erste SCS und/oder der zweite SCS basierend auf einem der Folgenden bestimmt wird:

einem Referenz-SCS, der durch eine netzwerkseitige Vorrichtung konfiguriert ist;
einem SCS, der durch die netzwerkseitige Vorrichtung für eine Zellengruppe einheitlich konfiguriert ist;
einem SCS, der einem Träger mit einer kleinsten Anzahl von Trägern entspricht, die mit einer Physical-Uplink-Control-Channel-Ressource, PUCCH-Ressource, konfiguriert sind;
einem SCS, der einem Träger mit einer größten Anzahl von Trägern entspricht, die mit einer PUCCH-Ressource konfiguriert sind;
einem SCS eines Trägers, der einer aktuellen Position in einem PUCCH-Zellen-Timing-Muster entspricht;
einem SCS eines Trägers, der gemäß einer Reihenfolge von Anzahlen von mehreren Trägern bestimmt wird, falls der erste Träger und/oder der zweite Träger den mehreren Trägern entspricht, oder einem SCS, der gemäß einer Reihenfolge von SCSs der mehreren Träger bestimmt wird;
einem SCS eines Trägers des Physical Downlink Shared Channel, PDSCH, mit semipersistentem Scheduling, SPS, der von dem Endgerät empfangen wird;
einem SCS eines Trägers zur Uplink-Übertragung, der durch Downlink-Steuerungsinformationen, DCI, angezeigt wird;
einem SCS eines primären Trägers, einer primären Zelle, PCell, oder einer primären sekundären Zelle, PScell; und
einem SCS einer sekundären Zelle, SCell.

10. Ein Endgerät (600), das einen Prozessor (610), einen Speicher (609) und ein Programm oder Anweisungen, die in dem Speicher (609) gespeichert sind und auf dem Prozessor (610) ausführbar sind, beinhaltet, wobei, wenn das Programm oder die Anweisungen von dem Prozessor (610) ausgeführt werden, die Schritte des Verfahrens zum Bestimmen einer HARQ-ACK-Übertragungsressource gemäß einem der Ansprüche 1 bis 9 implementiert werden.

11. Ein lesbares Speichermedium, wobei das lesbare Speichermedium ein Programm oder Anweisungen speichert und, wenn das Programm oder die Anweisungen von einem Prozessor (610) ausgeführt werden, das Programm oder die Anweisungen den Prozessor (610) veranlassen, die Schritte des Verfahrens zum Bestimmen einer HARQ-ACK-Übertragungsressource gemäß einem der Ansprüche 1 bis 9 zu implementieren.

**Revendications**

1. Un procédé pour la détermination d'une ressource de transmission HARQ-ACK comprenant :

la détermination (201), par un terminal, d'une première ressource de transmission HARQ-ACK sur la base d'un premier espacement de sous-porteuses, SCS, et d'une première porteuse ; et
dans un cas de détermination que la première ressource de transmission HARQ-ACK est indisponible, la détermination (202), par le terminal, d'une deuxième ressource de transmission HARQ-ACK après un premier temps de rétroaction HARQ-ACK sur la base du premier SCS et de la première porteuse, ou la détermination (202) d'une troisième ressource de transmission HARQ-ACK après le premier temps de rétroaction HARQ-ACK sur la base d'un deuxième SCS et d'une deuxième porteuse, le premier temps de rétroaction HARQ-ACK étant déterminé sur la base du premier SCS et de la première porteuse ;
dans lequel la détermination (202), par le terminal, d'une deuxième ressource de transmission HARQ-ACK après un premier temps de rétroaction HARQ-ACK sur la base du premier SCS et de la première porteuse comprend :

la détermination d'un sixième temps de rétroaction HARQ-ACK après le premier temps de rétroaction HARQ-ACK sur la base du premier SCS et du deuxième SCS, et la détermination de la deuxième ressource de transmission HARQ-ACK sur la base du sixième temps de rétroaction HARQ-ACK et de la première porteuse ; ou
dans lequel la détermination (202) d'une troisième ressource de transmission HARQ-ACK après le premier temps de rétroaction HARQ-ACK sur la base d'un deuxième SCS et d'une deuxième porteuse comprend :

la détermination d'un troisième temps de rétroaction HARQ-ACK sur la base du deuxième SCS et de la deuxième porteuse, et la détermination de la troisième ressource de transmission HARQ-ACK sur la base du troisième temps de rétroaction HARQ-ACK et de la deuxième porteuse ; un intervalle entre un canal partagé de liaison descendante physique, PDSCH, de planification semi-persistante, SPS, et le troisième temps de rétroaction HARQ-ACK n'est pas supérieur à une première longueur de report maximale, la première longueur de report maximale étant déterminée sur la base du premier SCS ou du deuxième SCS ; et la détermination d'un quatrième temps de rétroaction HARQ-ACK après le premier temps de rétroaction HARQ-ACK sur la base du premier SCS et du deuxième SCS, et la détermination de la troisième ressource de transmission HARQ-ACK sur la base du quatrième temps de rétroaction HARQ-ACK et de la deuxième porteuse.

2. Le procédé pour la détermination d'une ressource de transmission HARQ-ACK selon la revendication 1, dans lequel le troisième temps de rétroaction HARQ-ACK vient après le premier temps de rétroaction HARQ-ACK.

3. Le procédé pour la détermination d'une ressource de transmission HARQ-ACK selon la revendication 1, dans lequel un intervalle entre le premier temps de rétroaction HARQ-ACK ou le canal partagé de liaison descendante physique, PDSCH, de planification semi-persistante, SPS, et le quatrième temps de rétroaction HARQ-ACK n'est pas supérieur à la première longueur de report maximale.

4. Le procédé pour la détermination d'une ressource de transmission HARQ-ACK selon la revendication 1, dans lequel un intervalle entre le premier temps de rétroaction HARQ-ACK ou le canal partagé de liaison descendante physique, PDSCH, de planification semi-persistante, SPS, et le sixième temps de rétroaction HARQ-ACK n'est pas supérieur à une deuxième longueur de report maximale, la deuxième longueur de report maximale étant déterminée sur la base du premier SCS ou du deuxième SCS.

5. Le procédé pour la détermination d'une ressource de transmission HARQ-ACK selon la revendication 1, dans lequel la détermination (201), par un terminal, d'une première ressource de transmission HARQ-ACK sur la base d'un premier SCS et d'une première porteuse comprend l'un des éléments suivants :

la détermination, par le terminal, du premier temps de rétroaction HARQ-ACK sur la base du premier SCS ; la détermination, par le terminal, de la première porteuse sur la base du premier temps de rétroaction HARQ-ACK ; et la détermination, par le terminal, de la première ressource de transmission HARQ-ACK sur la base du premier temps de rétroaction HARQ-ACK et de la première porteuse ; et la détermination, par le terminal, du premier temps de rétroaction HARQ-ACK sur la base du premier SCS et de la première porteuse ; et la détermination, par le terminal, de la première ressource de transmission HARQ-ACK sur la base du premier temps de rétroaction HARQ-ACK et de la première porteuse.

6. Le procédé pour la détermination d'une ressource de transmission HARQ-ACK selon la revendication 5, dans lequel la détermination, par le terminal, du premier temps de rétroaction HARQ-ACK sur la base du premier SCS comprend au moins l'un des éléments suivants :

la détermination du premier temps de rétroaction HARQ-ACK sur la base d'un ensemble d'indications de temps de rétroaction HARQ-ACK correspondant au premier SCS ; la détermination du premier temps de rétroaction HARQ-ACK sur la base d'un ensemble d'indications de temps de rétroaction HARQ-ACK configuré pour un groupe de cellules.

7. Le procédé pour la détermination d'une ressource de transmission HARQ-ACK selon la revendication 5, dans lequel la détermination, par le terminal, du premier temps de rétroaction HARQ-ACK sur la base du premier SCS et de la première porteuse comprend : la détermination, par le terminal, du premier temps de rétroaction HARQ-ACK sur la base d'un ensemble d'indications de temps de rétroaction HARQ-ACK correspondant à la première porteuse.

8. Le procédé pour la détermination d'une ressource de transmission HARQ-ACK selon l'une quelconque des revendications 1 à 7, dans lequel la première porteuse et/ou la deuxième porteuse sont déterminées sur la base de l'un des éléments suivants :

une porteuse avec un nombre le plus petit de porteuses configurée avec une ressource de canal de commande de liaison montante physique, PUCCH ; une porteuse avec un nombre le plus grand de porteuses configurée avec une ressource PUCCH ; une porteuse correspondant à un emplacement actuel dans un schéma de synchronisation de cellule PUCCH ;

une porteuse déterminée selon un ordre de nombres de porteuses multiples dans un cas où la première porteuse et/ou la deuxième porteuse correspondent aux porteuses multiples ;

une porteuse du canal partagé de liaison descendante physique, PDSCH, de planification semi-persistante, SPS, reçu par le terminal ;

une porteuse pour une transmission de liaison montante indiquée par des informations de commande de liaison descendante, DCI ;

une porteuse primaire, une cellule primaire, PCell, ou une cellule secondaire primaire, PScell ; et

une cellule secondaire, SCell.

9. Le procédé pour la détermination d'une ressource de transmission HARQ-ACK selon l'une quelconque des revendications 1 à 7, dans lequel le premier SCS et/ou le deuxième SCS sont déterminés sur la base de l'un des éléments suivants :

un SCS de référence configuré par un dispositif côté réseau ;

un SCS uniformément configuré par le dispositif côté réseau pour un groupe de cellules ;

un SCS correspondant à une porteuse avec un nombre le plus petit de porteuses configurée avec une ressource de canal de commande de liaison montante physique, PUCCH ;

un SCS correspondant à une porteuse avec un nombre le plus grand de porteuses configurée avec une ressource PUCCH ;

un SCS d'une porteuse correspondant à un emplacement actuel dans un schéma de synchronisation de cellule PUCCH ;

un SCS d'une porteuse déterminée selon un ordre de nombres de porteuses multiples dans un cas où la première porteuse et/ou la deuxième porteuse correspondent aux porteuses multiples, ou un SCS déterminé selon un ordre de SCS des porteuses multiples ;

un SCS d'une porteuse du canal partagé de liaison descendante physique, PDSCH, de planification semi-persistante, SPS, reçu par le terminal ;

un SCS d'une porteuse pour une transmission de liaison montante indiquée par des informations de commande de liaison descendante, DCI ;

un SCS d'une porteuse primaire, d'une cellule primaire, PCell, ou d'une cellule secondaire primaire, PScell ; et

un SCS d'une cellule secondaire, SCell.

10. Un terminal (600), comprenant un processeur (610), une mémoire (609), et un programme ou des instructions stockés dans la mémoire (609) et exécutables sur le processeur (610), dans lequel lorsque le programme ou les instructions sont exécutés par le processeur (610), les étapes du procédé pour la détermination d'une ressource de transmission HARQ-ACK selon l'une quelconque des revendications 1 à 9 sont mises en œuvre.

11. Un support de stockage lisible, le support de stockage lisible stockant un programme ou des instructions, et lorsque le programme ou les instructions sont exécutés par un processeur (610), le programme ou les instructions amenant le processeur (610) à mettre en œuvre les étapes du procédé pour la détermination d'une ressource de transmission HARQ-ACK selon l'une quelconque des revendications 1 à 9.

FIG. 1

Start

A terminal determines a first HARQ-ACK transmission resource based on a first subcarrier spacing SCS and a first carrier

201

In a case of determining that the first HARQ-ACK transmission resource is unavailable, the terminal determines a second HARQ-ACK transmission resource after a first HARQ-ACK feedback time based on the first subcarrier spacing SCS and the first carrier, or determines a third HARQ-ACK transmission resource after the first HARQ-ACK feedback time based on a second subcarrier spacing SCS and a second carrier

202

End

FIG. 2

K1_Def=4 (15 kHZ)

CC1
30 kHz

SPS1

slot n   slot n+1   slot n+2   slot n+3   slot n+4   slot n+5   slot n+6   slot n+7   slot n+8   slot n+9   slot n+10   slot n+11   slot n+12   slot n+13

K1=1 (15 kHZ)

CC2
15 kHz

slot n        slot n+1        slot n+2        slot n+3        slot n+4        slot n+5        slot n+6

CC3
15 kHz

ACK/N
ACK

slot n   slot n+1   slot n+2   slot n+3   slot n+4   slot n+5   slot n+6   slot n+7   slot n+8   slot n+9   slot n+10   slot n+11   slot n+12   slot n+13

| PUCCH cell timing pattern 1 (PUCCH cell timing pattern 1) PUCCH applicable cell = CC2 (available PUCCH carrier is CC2) | PUCCH cell timing pattern 2 (PUCCH cell timing pattern 2) PUCCH applicable cell = CC3 (available PUCCH carrier is CC3) |
|---|---|

DL (downlink)   Special (special)   UL (uplink)   SPS PDSCH (semi-persistent scheduling physical downlink shared channel)   PUCCH (physical uplink control channel)

FIG. 3

EP 4 383 629 B1

400

Apparatus for determining HARQ-ACK transmission resource

401

First processing module

402

Second processing module

FIG. 4

500

Communication device

501

Processor

Memory

502

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- UE feedback enhancements for HARQ-ACK. *3GPP DRAFT; R1-2102351*

- Discussion on two aspects of UE HARQ-ACK feedback enhancements. *3GPP DRAFT; R1-2104854*